(19) Europäisches Patentamt / European Patent Office / Office européen des brevets

(11) **EP 3 405 891 B1**

(12) **EUROPÄISCHE PATENTSCHRIFT**

(45) Veröffentlichungstag und Bekanntmachung des Hinweises auf die Patenterteilung:
**04.09.2019 Patentblatt 2019/36**

(21) Anmeldenummer: **17736953.5**

(22) Anmeldetag: **07.07.2017**

(51) Int Cl.:
*G06F 17/50* *(2006.01)*     *B21D 37/20* *(2006.01)*
*B21D 22/26* *(2006.01)*

(86) Internationale Anmeldenummer:
**PCT/EP2017/067141**

(87) Internationale Veröffentlichungsnummer:
**WO 2018/011087 (18.01.2018 Gazette 2018/03)**

(54) **KOMPENSATION DER RÜCKFEDERUNG BEI DER HERSTELLUNG VON BLECHUMFORMTEILEN**

SPRINGBACK COMPENSATION IN THE PRODUCTION OF FORMED SHEET-METAL PARTS

COMPENSATION DE RETOUR ÉLASTIQUE LORS DE LA PRODUCTION DE PIÈCES EN TÔLE FAÇONNÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.07.2016 DE 102016212933**

(43) Veröffentlichungstag der Anmeldung:
**28.11.2018 Patentblatt 2018/48**

(73) Patentinhaber: **inigence gmbh**
**74626 Bretzfeld (DE)**

(72) Erfinder:
• **BIRKERT, Arndt**
  **74626 Bretzfeld (DE)**
• **HAAGE, Stefan**
  **88250 Weingarten (DE)**
• **STRAUB, Markus**
  **74182 Obersulm (DE)**
• **HARTMANN, Benjamin**
  **97941 Tauberbischofsheim (DE)**

(74) Vertreter: **Patentanwälte**
**Ruff, Wilhelm, Beier, Dauster & Partner mbB**
**Kronenstraße 30**
**70174 Stuttgart (DE)**

(56) Entgegenhaltungen:
**DE-A1-102005 044 197     US-A1- 2004 176 863**

• **GAN W ET AL: "Die design method for sheet springback", INTERNATIONAL JOURNAL OF MECHANICAL SCIENCES, PERGAMON PRESS, OXFORD, GB, Bd. 46, Nr. 7, 1. Juli 2004 (2004-07-01), Seiten 1097-1113, XP004573378, ISSN: 0020-7403, DOI: 10.1016/J.IJMECSCI.2004.06.006 in der Anmeldung erwähnt**
• **FIRAT ET AL: "Computer aided analysis and design of sheet metal forming processes:", MATERIALS AND DE, LONDON, GB, Bd. 28, Nr. 4, 1. Dezember 2006 (2006-12-01), Seiten 1311-1320, XP005787004, ISSN: 0261-3069, DOI: 10.1016/J.MATDES.2006.01.025 in der Anmeldung erwähnt**

EP 3 405 891 B1

**EP 3 405 891 B1**

**Beschreibung**

ANWENDUNGSGEBIET UND STAND DER TECHNIK

Die Erfindung bezieht sich auf ein Verfahren zur Ermittlung einer Wirkfläche eines Umformwerkzeugs zur Herstellung eines komplexen Umformteils mit einer Zielgeometrie durch ziehtechnisches Umformen eines Werkstücks gemäß dem Oberbegriff von Anspruch 1, auf ein Verfahren zur Herstellung eines Umformwerkzeugs, auf ein Verfahren zur Herstellung eines komplexen Umformteils sowie auf ein Computerprogrammprodukt.

Umformteile aus Blech, insbesondere Karosserieteile für Fahrzeuge, werden in der Regel mittels einer Ziehtechnik, z.B. durch Tiefziehen oder Karosserieziehen, hergestellt. Dazu wird das Halbzeug, eine sogenannte Blechplatine, in ein mehrteiliges Umformwerkzeug gelegt. Mittels einer Presse, in die das Umformwerkzeug eingespannt ist, wird das Umformteil geformt. Die fertigen Umformteile werden in der Regel über mehrere Umformstufen wie Ziehen, Nachschlagen, Einstellen, etc. kombiniert mit Beschneidschritten aus flachen Blechplatinen hergestellt.

Die Werkzeugherstellung eines Umformwerkzeugs verläuft typischerweise in zahlreichen Stufen. Eine umfassende Darstellung findet sich in dem Fachbuch: A. Birkert, S. Haage, M. Straub: "Umformtechnische Herstellung komplexer Karosserieteile - Auslegung von Ziehanlagen", Springer Vieweg-Verlag (2013) Kapitel 5.9. Bis zur Stufe der Werkzeugeinarbeitung und Werkzeugausprobe wird ein grundsätzlich funktionsfähiges Umformwerkzeug hergestellt. Daran schließt sich die Stufe der Werkzeugkorrektur im Hinblick auf Maß- und Formgenauigkeit an. Diese Werkzeugkorrektur beinhaltet alle Maßnahmen, die am grundsätzlich funktionsfähigen Werkzeug vorgenommen werden, um neben der reißerfreien und faltenfreien Herstellbarkeit auch die Herstellung maß- und formgenauer Bauteile zu gewährleisten.

Die im Rahmen der sogenannten Tryoutphase durchzuführenden Korrekturen sind erforderlich, da sich komplexe Ziehteile auf Anhieb praktisch nicht innerhalb der vorgegebenen Toleranzen fertigen lassen. Maßabweichungen am ersten werkzeugfallenden Teil haben mannigfaltige Ursachen, sowohl in Bezug auf die Absolutlage als auch in Bezug auf die Streuung der Messergebnisse über mehrere Teile. Im Schwerpunkt sind Maßabweichungen die Folge der elastischen Rückfederung (Aufsprung) der Teile nach dem Öffnen des Werkzeugs beziehungsweise nach der Entnahme aus dem Werkzeug.

Die elastische Rückfederung des Umformteils ist bis heute einer der größten Kostentreiber. So müssen im Werkzeugbau heute erhebliche Anteile der Gesamtkosten aufgewendet werden, um die durch Rückfederung entstehenden Geometrieabweichungen zu kompensieren.

Es gibt unterschiedliche Korrekturstrategien, um (ausgehend von einem grundsätzlich funktionsfähigen Werkzeug) durch Veränderung der Geometrie bzw. Gestalt der eigentlichen, das Pressteil abbildenden Werkzeuggeometrie Maß- und Formabweichungen an einem Pressteil so weit zu beseitigen, dass das aus dem Umformprozess resultierende Werkstück im Rahmen der Toleranzen die gewünschte Zielgeometrie aufweist. Diese Zielgeometrie wird im Rahmen dieser Anmeldung auch als "Nullgeometrie" des Werkstücks bezeichnet. Folgende Definitionen sollen im Rahmen dieser Anmeldung gelten.

Unter "Nullgeometrie" soll diejenige Geometrie des Werkstücks verstanden werden, die man in der betreffenden Operationsstufe zu erreichen gedenkt. Ein Umformwerkzeug, welches auf der CAD-Sollgeometrie des herzustellenden Werkstücks (d.h. die Nullgeometrie) modelliert wird, wird als "Nullwerkzeug" bezeichnet. In einem solchen (nicht kompensierten) Werkzeug sind die Werkzeug-Nullgeometrie und die Werkstück-Nullgeometrie identisch. Unter "Korrekturgeometrie" ist die korrigierte, also zum Beispiel überbogene, Werkzeuggeometrie zu verstehen. Diese weicht zwingend von der in der betreffenden Stufe zu erreichenden Nullgeometrie (d.h. Zielgeometrie des Werkstücks) ab, da nach dem Öffnen des Werkzeugs von einer Rückfederung ausgegangen wird. Mit "Rückfederungsgeometrie" wird die nach dem Öffnen des Werkzeugs sich ergebende Werkstückgeometrie bezeichnet. Die Rückfederungsgeometrie sollte nach der letzten Operation der Nullgeometrie des Bauteils, also der Zielgeometrie entsprechen. Korrekturstrategien sollten also so beschaffen sein, dass durch Erzeugung geeigneter Korrekturgeometrien am Umformwerkzeug die Herstellung eines Bauteils in Nullgeometrie ermöglicht wird. Ein Werkzeug mit Korrekturgeometrie wird in der Regel als "kompensiertes Werkzeug" bezeichnet, so dass die Korrekturgeometrie auch als "Kompensationsgeometrie" bezeichnet werden kann.

Die heutzutage meist angewandte Korrekturmethode ist die Methode der Inversen Vektoren. Diese wird in der Originalschrift (z.B. W. Gan, R.H. Wagoner: "Die design method for sheet springback", International Journal of Mechanical Sciences 46 (2004), Seiten 1097 - 1113) auch als Displacement-Adjustment-Method (DA-Methode) bezeichnet. Der Begriff "Inverser Vektor" resultiert aus Kompensationsalgorithmen zur Rückfederungskompensation, wie sie heute in strenger oder in modifizierter Form in handelsüblicher FEM-Software zur Simulation von Blechumformprozessen verwendet werden. Ein Beispiel ist die kommerziell erhältliche Simulationssoftware "*AutoForm*®" der Autoform Engineering GmbH, Neerach (CH).

Aufgrund vorhandener Geometriedaten am Ende der letzten Operation vor Öffnen des Werkzeugs und der entsprechenden Geometriedaten nach Öffnen des Werkzeugs - also nach Berechnung der Rückfederung - lässt sich ein Verschiebungsvektor für jeden einzelnen Elementknoten berechnen. Voraussetzung hierfür ist, dass im letzten Rechenschritt, also bei der Rückfederungsberechnung, Knotengleichheit gewährleistet ist. Knotengleichheit meint, dass jedem Knoten im noch durch das Werkzeug belasteten Teil in eindeutiger Weise ein Knoten im unbelasteten, also rückgefederten Teil zugeordnet werden kann. Das Verschiebungsfeld ergibt somit in Verbindung mit der z.B. durch einen CAD-Datensatz vorgegebenen Nullgeometrie das Ausmaß der Rückfederung. Will man diese Rückfederung nun korrigieren, so lassen sich die Formflächen der Korrekturgeometrie nach diesem Algorithmus in strenger Form erzeugen, indem man das Verschiebungsfeld in umgekehrter Richtung auf die Nullgeometrie anwendet. "Streng" meint hier, dass die Vektoren tatsächlich mathematisch korrekt invertiert werden. Diese Vorgehensweise führt in der Regel bei kleinen bis mäßigen Geometrieabweichungen zu hinreichend flächengleichen Korrekturgeometrien. Bei größeren Rückfederungen müssen bis heute gewisse Flächenfehler zwischen Korrekturgeometrie und Nullgeometrie in Kauf genommen werden.

Bei einer "einfachen" Invertierung der Verschiebungsvektoren zwischen Nullgeometrie und Rückfederungsgeometrie kann ein geometrischer Fehler entstehen. In dem Fachartikel: X. Yang, F. Ruan: "A die design method for springback compensation based on displacement adjustment", International Journal of Mechanical Sciences (2011) stellen die Autoren eine Vorgehensweise (Comprehensive Compensation (CC) Methode) vor, die eine Verminderung des Problems ermöglichen soll. Der Ansatz der CC Methode besteht darin, die Richtung der invertierten Verschiebungsvektoren (im Vergleich zur DA-Methode) nach bestimmten geometrischen Kriterien zu verändern.

Die Offenlegungsschrift DE 10 2005 044 197 A1 beschreibt ein Verfahren zur rückfederungskompensierten Herstellung von Blechformteilen mit einem Umformwerkzeug, bei welchem aus einem dreidimensionalen CAD-Modell des Umformwerkzeuges parametrisierte Werkzeugnetze der Wirkflächen des Umformwerkzeuges erzeugt werden, in einem iterativen Prozess mit Hilfe der parametrisierten Werkzeugnetze eine Simulation des Umformprozesses, eine Simulation der Rückfederung des Blechformteils, eine Ermittlung von Rückfederungsursachen sowie eine aus den Rückfederungsursachen abgeleitete Modifizierung von Netzparametern der parametrisierten Werkzeugnetze und/oder von Prozessparametern des Umformprozesses zur Kompensation der Rückfederung des Blechformteils erfolgt, nach dem iterativen Prozess aus den modifizierten Netzparametern der parametrisierten modifizierten Werkzeugnetze geometrische Parameter abgeleitet werden, mit welchen die Modifizierungen der Werkzeugnetze auf das CAD-Modell übertragen werden, ein rückfederungskompensierendes Umformwerkzeug nach Vorgabe des modifizierten CAD-Modells hergestellt und/oder angepasst wird und - das Blechformteil mit dem rückfederungskompensierenden Umformwerkzeug umgeformt wird, wobei die modifizierten Prozessparameter eingestellt werden.

## AUFGABE UND LÖSUNG

Vor diesem Hintergrund liegt der Erfindung die Aufgabe zugrunde, ein Verfahren der eingangs genannten Art bereitzustellen, das es unter Beibehaltung der Vorteile herkömmlicher Verfahren ermöglicht, Umformwerkzeuge mit Kompensationsgeometrien herzustellen, die so beschaffen sind, dass die damit hergestellten Bauteile auch bei größeren Rückfederungen weitestgehend flächengleich oder flächengleich mit der für das Bauteil angestrebten Nullgeometrie sind.

Zur Lösung dieser Aufgabe stellt die Erfindung ein Verfahren mit den Merkmalen von Anspruch 1 bereit. Weiterhin werden ein Verfahren mit den Merkmalen von Anspruch 9, ein Verfahren mit den Merkmalen von Anspruch 10 sowie ein Computerprogrammprodukt mit den Merkmalen von Anspruch 11 bereitgestellt. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Eine mit der herkömmlichen DA-Methode verbundene Problematik besteht darin, dass die so erzeugte Korrektur-/Kompensationsgeometrie - je nach Bauteilgrundgeometrie und Betrag der Rückfederung - sowohl bereichsweise als auch global in ihrem Flächeninhalt vom Flächeninhalt der Nullgeometrie abweicht. Das heißt, dass sowohl in der Simulation als auch in der Realität das Werkstück so wie es im kompensierten Werkzeug am Ende des Umformvorgangs vorliegt, einen anderen Oberflächen-Flächeninhalt aufweist als die Nullgeometrie. Damit kann ein nach dieser Methode, welche heute den Stand der Technik darstellt, nach Rückfederung praktisch nie vollständig die angestrebte Nullgeometrie annehmen, weil sich dazu lokale und regionale Bauteilgeometriemerkmale alleine aufgrund der im Werkstück gespeicherten elastischen Energie in einer solchen Weise plastisch verformen müsste, dass am Ende lokal, regional und global Flächengleichheit herrscht, was aus physikalischen Gründen schlichtweg nicht möglich ist. In der Praxis sind unter anderem diese Flächenabweichungen zwischen korrigierter Geometrie und Nullgeometrie, welche im Werkzeugbau zu mehreren Iterationsschleifen bei der Werkzeugüberarbeitung führen, um ein Bauteil in den vorgesehenen Toleranzbereich zu bringen. Besondere Schwierigkeiten ergeben sich vor allem auch bei mehrstufigen Prozessen, weil Teile aus einer Operation gar nicht in die Folgeoperation passen.

Diese Probleme können bei Nutzung von Verfahren und Systemen gemäß der beanspruchten Erfindung vermindert oder vermieden werden.

Gemäß einer Formulierung wird ein Verfahren zur Ermittlung einer Wirkfläche eines Umformwerkzeugs vorgeschlagen, das zur Herstellung eines komplexen Umformteils geeignet sein soll. Die gewünschte Form des komplexen Umformteils nach Abschluss der Umformung kann durch eine Zielgeometrie definiert werden. Für die Umformung wird ein ziehtechnisches Umformverfahren genutzt, beispielsweise das Tiefziehen. Die Ermittlung der Wirkfläche erfolgt computerbasiert mithilfe von Simulationsrechnungen. Analog zur herkömmlichen DA-Methode wird zunächst eine Umformoperation an dem Werkstück mittels eines Nullwerkzeugs simuliert, um rechnerisch eine erste Konfiguration des Werkzeugs zu erzeugen. Der Begriff "erste Konfiguration" beschreibt somit die eingangs erwähnte Nullgeometrie des Werkstücks. Das "Nullwerkzeug" repräsentiert dabei ein Umformwerkzeug, welches eine Wirkfläche bzw. Wirkflächengeometrie aufweist, die der angestrebten Zielgeometrie des Werkstücks entspricht. Basierend auf den Ergebnissen dieser Umformoperation wird nachfolgend eine elastische Rückfederung des Werkstücks aus der erzeugten ersten Konfiguration in eine zweite Konfiguration simuliert, die von externen Kräften weitgehend frei ist. "Weitgehend frei" bedeutet hier, dass bei der Simulation der Einfluss der Schwerkraft berücksichtigt werden sollte. Eine freie Rückfederung (ohne Berücksichtigung des Einflusses der Schwerkraft) soll als Grenzfall von der Formulierung "weitgehend frei" auch umfasst sein. Diese Simulation der Rückfederung erfolgt auf Basis eines elastisch-plastischen Materialmodells des Werkstücks, aus dem die Rückfederungseigenschaften abgeleitet werden. Die "zweite Konfiguration" entspricht somit der eingangs erwähnten Rückfederungsgeometrie des Werkstücks.

Sind die erste Konfiguration und die zweite Konfiguration ermittelt, schließt sich die Berechnung eines Abweichungsvektorfelds mit Abweichungsvektoren zwischen der ersten Konfiguration und der zweiten Konfiguration an. Mithilfe des Abweichungsvektorfelds kann der geometrische Unterschied zwischen der ersten Konfiguration und der zweiten Konfiguration quantitativ beschrieben werden. Das Abweichungsvektorfeld kann auch als Verschiebungsvektorfeld für die Rückfederung bezeichnet werden.

Wichtig ist dabei unter anderem, dass im Rahmen erfindungsgemäßer Verfahren unterschiedliche Abweichungsvektorfelder genutzt werden können. Eine Möglichkeit besteht darin, die erste Konfiguration und die zweite Konfiguration jeweils durch ein Finite-Elemente-Netz zu beschreiben und die Abweichungsvektoren zwischen Netzknoten der ersten Konfiguration und zugeordneten Netzknoten der zweiten Konfiguration zu bestimmen. Dies ist jedoch nicht zwingend. Geeignete Abweichungsvektorfelder können auch ohne Nutzung von Netzknoten zwischen anderen einander zugeordneten Punkten der ersten Konfiguration und der zweiten Konfiguration definiert werden. Insbesondere können Abweichungsvektoren genutzt werden, die orthogonal zur ersten Konfiguration bzw. der dadurch beschriebenen Fläche stehen

Ein wichtiger Schritt des Verfahrens besteht in der Durchführung einer nichtlinearen strukturmechanischen Finite-Elemente-Simulation an dem Werkstück. Im Rahmen dieser Simulation wird das Werkstück unter Verwendung der oben genannten Abweichungsvektoren des Abweichungsvektorfelds ausgehend von der ersten Konfiguration oder der zweiten Konfiguration in eine Zielkonfiguration verformt. Die nichtlineare strukturmechanische Finite-Elemente-Simulation umfasst unter anderem den Schritt des Definierens von mindestens drei Fixierungspunkten der ersten oder der zweiten Konfiguration. Ein "Fixierungspunkt" im Sinne dieser Anmeldung ist dafür vorgesehen, bei der nichtlinearen strukturmechanischen Finite-Elemente-Simulation bezüglich seiner Lage unverändert zu bleiben. Fixierungspunkte sind also unter der nichtlinearen strukturmechanischen Finite-Elemente-Simulation räumlich invariant. Die erste Konfiguration oder die zweite Konfiguration wird dann in den Fixierungspunkten fixiert. Bei einem realen Umformgang könnte der Fixierungsschritt mit einer ortsfesten punktuellen Lagerung der ersten oder der zweiten Konfiguration bzw. eines entsprechend gestalteten Werkstücks verglichen werden.

Danach erfolgt eine Annäherung der Konfiguration des Werkstücks an die Zielkonfiguration in Bereichen außerhalb der Fixierungspunkte mithilfe der Berechnung von Kräften oder Verschiebungen unter Berücksichtigung der Steifigkeit des Werkstücks bis zum Erreichen der Zielkonfiguration. Die erreichte Zielkonfiguration wird dann als Wirkfläche für das Umformwerkzeug festgelegt. Die Gestalt der Wirkfläche kann durch eine Wirkflächengeometrie-Spezifikation beschrieben werden. Die Zielkonfiguration beschreibt die Korrekturgeometrie des Werkstücks nach Durchführung des Verfahrens. Das entsprechende Umformwerkzeug, dessen Wirkfläche gemäß der Zielkonfiguration gestaltet ist, kann als kompensiertes Umformwerkzeug bezeichnet werden.

Ein wichtiger Aspekt dieses Lösungsansatzes besteht darin, dass die Korrekturgeometrie nicht allein durch strenge geometrische Umkehrung eines Abweichungsvektorfeldes erzeugt wird (rein geometrische Kompensation), sondern dadurch, dass bei der Erzeugung der Kompensationsgeometrie außer der Werkstückgeometrie auch das mechanische Verhalten des Werkstücks in die Berechnung der Kompensationsgeometrie mit einbezogen wird. Dies wird durch die Berücksichtigung der Werkstücksteifigkeit erreicht. Dafür kommt die nichtlineare Finite-Elemente-Methode (nichtlineare FEM) als numerisches Werkzeug zum Einsatz. Mit diesem numerischen Werkzeug lassen sich sowohl elastizitätstheoretische als auch plastizitätstheoretische Lösungsansätze der Kontinuumsmechanik vereinfachen und damit näherungsweise berechnen. Der Zusammenhang zwischen Kräften und Verschiebungen wird sowohl im Kontinuum als auch in der diskretisierten Gesamtstruktur sowie im einzelnen Element rechnerisch ganz allgemein durch die Steifigkeit (bzw. Werkstücksteifigkeit) hergestellt. Die Steifigkeit beschreibt das Last-Verformungsverhalten eines Elements bzw. eines Körpers. Eine umfassende Darstellung von Grundprinzipien der nichtlinearen Finite-Elemente-Methode findet sich in dem Fachbuch: W. Rust: "Nichtlineare Finite-Elemente-Berechnungen", Vieweg+Teubner Verlag (2009) Seite 21 ff. Details zur Anwendung im Rahmen der vorliegenden Anmeldung werden im Zusammenhang mit den Ausführungsbeispielen erläutert.

Für den Schritt des Definierens von Fixierungspunkten ist bei bevorzugten Ausführungsformen vorgesehen, dass zunächst ein regionaler oder globaler Anpassungsbereich ausgewählt wird, in welchem eine Anpassung zwischen der ersten Konfiguration und der zweiten Konfiguration erfolgen soll. Dann werden die erste Konfiguration und die zweite Konfiguration ohne Veränderung der jeweiligen Gestalt relativ zueinander derart ausgerichtet, dass nach Maßgabe eines Abweichungskriteriums in dem ausgewählten Anpassungsbereich eine minimale geometrische Abweichung zwischen der ersten Konfiguration und der zweiten Konfiguration vorliegt. Diese gegenseitige Angleichung der ersten und der zweiten Konfiguration kann beispielsweise durch Anwendung der Methode der kleinsten Fehlerquadrate in dem Anpassungsbereich erfolgen. Nach Abschluss der Anpassung werden Positionen mit einem lokalen Minimum einer Abweichung zwischen der ersten Konfiguration und der zweiten Konfiguration rechnerisch ermittelt und die mindestens drei Fixierungspunkte werden an mindestens drei ausgewählten Positionen mit einem lokalen Minimum der Abweichung definiert. Beispielsweise kann es sein, dass sich nach Durchführung der Anpassung die erste und die zweite Konfiguration bzw. die dadurch definierten Flächen entlang von geraden oder gekrümmten Schnittlinien durchsetzen bzw. schneiden. Jede Position auf einer Schnittlinie kann als Position für einen Fixierungspunkt in Betracht kommen, da dort der Abstand zwischen erster und zweiter Konfiguration jeweils gleich null ist. Es können Fixierungspunkte auch an Positionen angebracht sein, bei denen nach der Anpassungsrechnung ein möglichst geringer, aber endlicher Abstand verbleibt.

Die Größe und die Gestalt des Anpassungsbereichs, innerhalb dessen die Angleichung erfolgen soll, können beispielsweise in Abhängigkeit von der Bauteilgeometrie (z.B. Komplexität der Gestalt) variieren und entsprechend gewählt werden. Es kann sein, dass der Anpassungsbereich die Gesamtfläche des Werkstücks umfasst. Dieser Fall wird hier als "globaler Anpassungsbereich" bzw. globale Anpassung bezeichnet. Es ist auch möglich, dass der Anpassungsbereich nur einen Teilbereich einer Gesamtfläche des Werkstücks umfasst. Dies wird hier als "regionaler Anpassungsbereich" bzw. regionale Anpassung bezeichnet.

Vorzugsweise werden Positionen von Fixierungspunkten derart ausgewählt, dass die Fixierungspunkte mindestens eine Dreiecksanordnung bilden. Bei einer Dreiecksanordnung kann eine Überbestimmung der "Lagerung" bzw. Fixierung der Bauteile für die Durchführung der nachfolgenden virtuellen Verformungen vermieden werden. Bei Bedarf, z.B. wenn eine Dreiecksanordnung nicht ausreichend stabil erscheint, kann mindestens ein weiterer Fixierungspunkt genutzt werden. Beispielsweise können vier, fünf oder sechs Fixierungspunkte in geeigneten Abständen zueinander definiert werden. Eine Überbestimmung der Fixierung sollte auch dann vermieden werden.

Bei der nicht linearen strukturmechanischen Finite-Elemente-Simulation wird die Konfiguration des Werkstücks an die Zielkonfiguration rechnerisch angenähert, wobei unter anderem die Steifigkeit des Werkstücks bei den Berechnungen berücksichtigt wird. Die Steifigkeit kann z.B. durch eine Steifigkeitsmatrix parametrisiert werden. Dabei wird vorzugsweise entweder eine Berechnung von Kräften oder eine Berechnung von Verschiebungen jeweils unter Berücksichtigung der Steifigkeit des Werkstücks durchgeführt. Diese unterschiedlichen Varianten werden in dieser Anmeldung auch als "kräftebasierte Simulation" und "verschiebungsbasierte Simulation" bezeichnet. Bevorzugte Varianten werden nachfolgend erläutert.

Bei einer bevorzugten Variante einer kräftebasierten Simulation, also einer Berechnung unter Berücksichtigung von Kräften, wird die Berechnung des Abweichungsvektorfelds so durchgeführt, dass Abweichungsvektoren zwischen Netzknoten der ersten Konfiguration und zugeordneten Netzknoten der zweiten Konfiguration berechnet werden. Das Abweichungsvektorfeld kann in diesem Fall auch als "Knotenverschiebungsfeld" bezeichnet werden. Auf Basis des so ermittelten Abweichungsvektorfelds wird dann eine zu der zweiten Konfiguration inverse dritte Konfiguration berechnet. Dabei werden aus den Abweichungsvektoren durch geometrische Invertierung bezüglich der ersten Konfiguration Korrekturvektoren berechnet und die dritte Konfiguration wird durch Anwendung der Korrekturvektoren auf Netzknoten der ersten Konfiguration berechnet. Die so ermittelte "dritte Konfiguration" beschreibt somit eine Invers-Geometrie zur Rückfederungsgeometrie und entspricht insoweit der Korrekturgeometrie aus der herkömmlichen Methode der inversen Vektoren.

Während diese Korrekturgeometrie bei der herkömmlichen DA-Methode das Endergebnis darstellen kann, wird die dritte Konfiguration bei der hier beschriebenen Verfahrensvariante als Zielvorgabe für die Annäherung bzw. als Anhaltspunkt für die zu findende Kompensationsfläche genutzt. Bei der Verfahrensvariante werden rechnerisch Verformungskräfte in das Werkstück in mindestens einem außerhalb eines Fixierungspunkts liegenden Krafteinleitungsbereich eingeleitet, um die Konfiguration des Werkstücks an die dritte Konfiguration anzunähern. Bei den Verformungskräften kann es sich um Punktkräfte, Linienkräfte und/oder Flächenkräfte handeln. Es werden Verformungen des Werkstücks bei Einwirkung der Verformungskräfte mittels der nicht linearen strukturmechanischen Finite-Elemente-Simulation unter Berücksichtigung der Steifigkeit des Werkstücks ermittelt. Mit anderen Worten: Der Widerstand des Werkstücks gegen die Verformung wird rechnerisch bei der Simulation berücksichtigt. Die Verformungskräfte werden hinsichtlich Stärke, Richtung, Ort der Krafteinleitung und/oder eventueller weiterer Parameter variiert, bis bei elastischer Verformung des Werkstücks die Zielkonfiguration erreicht ist. Die erreichte Zielkonfiguration wird dann als Wirkfläche für das Umformwerkzeug festgelegt. Bei dieser Verfahrensvariante dient also ein knotenbasiertes inverses Vektorfeld (Knotenverschiebung im Raum analog zur herkömmlichen DA-Methode) als Zielgeometrie (dritte Konfiguration).

Eine besonders schnelle und ressourcenschonende Berechnung wird bei einer Verfahrensvariante dadurch erreicht, dass die dritte Konfiguration durch ein Stützelement-Raster mit einer Vielzahl von mit Abstand zueinander liegenden (virtuellen) Stützelementen definiert wird, wobei jedes Stützelement eine Position auf der Zielkonfiguration (dritte Konfiguration) repräsentiert. Die Stützelemente können als virtuelle "Anschläge" bei der virtuellen Verformung dienen. Die Annäherung der Konfiguration an die dritte Konfiguration kann dann durch eine gleichzeitige oder sequenzielle Krafteinleitung an unterschiedlichen Krafteinleitungsbereichen bis zu einem Anliegen der Konfiguration an einer Vielzahl von Stützelementen bei elastischer Verformung simuliert werden. Die Zielkonfiguration muss nicht zwingend einen "Kontakt" zu allen Stützelementen haben, es kann auch bei einzelnen Stützelementen ein Abstand verbleiben.

Als Alternative zu einer kräftebasierten Simulation kann eine verschiebungsbasierte Simulation durchgeführt werden, die ohne Vorgabe von Kräften über die Vorgabe von Verschiebungen funktioniert. Bei dieser Verfahrensvariante wird das Abweichungsvektorfeld mit den Abweichungsvektoren zwischen der ersten und der zweiten Konfiguration derart berechnet, dass jeder Abweichungsvektor ein Normal-Abweichungsvektor ist, also ein Vektor, der an einem ausgewählten Ort der ersten Konfiguration senkrecht zu der durch die erste Konfiguration definierten ersten Fläche an dem ausgewählten Ort steht und den ausgewählten Ort mit einem zugeordneten Ort der zweiten Konfiguration verbindet. Das Abweichungsvektorfeld ist also ein Vektorfeld senkrecht zur Nullgeometrie, welches die Rückfederung berücksichtigt. Basierend darauf erfolgt eine Berechnung eines Ziel-Verschiebungsvektorfelds mit einer Vielzahl von Ziel-Verschiebungsvektoren, wobei jeder Ziel-Verschiebungsvektor einen ausgewählten Ort der ersten Konfiguration mit einem zugeordneten Ort der Zielkonfiguration verbindet. Die Ziel-Verschiebungsvektoren legen somit ausgehend von der ersten Konfiguration (Nullgeometrie des Werkstücks) die zu erreichende Zielgeometrie fest. Dabei werden erste Komponenten der Ziel-Verschiebungsvektoren durch geometrische Invertierung von Normal-Abweichungsvektoren des Abweichungsvektorfelds bezüglich der ersten Konfiguration vorgegeben. Diese ersten Komponenten stehen somit senkrecht auf der ersten Konfiguration. Die zweite Komponente und die dritte Komponente der dreikomponentigen Ziel-Verschiebungsvektoren werden dann basierend auf den ersten Komponenten mittels der nichtlinearen strukturmechanischen Finite-Elemente-Simulation unter Berücksichtigung der Steifigkeit des Werkzeugs berechnet. Hier werden somit invertierte Vektoren als Randbedingung im Rahmen der FEM-Simulation genutzt.

Es gibt bei dieser Verfahrensvariante unterschiedliche Möglichkeiten, die Normal-Abweichungsvektoren zu definieren bzw. zu berechnen. Bei einer Variante kann der Normal-Abweichungsvektor als diejenige Komponente eines "Knotenverschiebungsvektors" beschrieben werden, die senkrecht auf der ersten Konfiguration steht. Dann ist der oben genannte "ausgewählte Ort" ein Netzknoten des FEM-Netzes. Bei einer anderen Variante erfolgt die Berechnung der Normal-Abweichungsvektoren unabhängig von Netzknoten, so dass ein Normal-Abweichungsvektor seinen Ursprung auch außerhalb eines Netzknotens der FEM-Simulation haben kann.

Für den Schritt des Annäherns der Konfiguration des Werkstücks an die Zielkonfiguration außerhalb der Fixierungspunkte gibt es somit zwei alternative Möglichkeiten, nämlich einerseits mittels Berechnung von Kräften und andererseits mittels Berechnung von Verschiebungen. Diese Berechnungsschritte werden jeweils unter Berücksichtigung der Steifigkeit des Werkstücks bis zum Erreichen der Zielkonfiguration durchgeführt.

Gemäß einer anderen allgemeinen Formulierung kann dieser Aspekt auch so ausgedrückt werden, dass der Annäherungsschritt erfolgt, indem bei der strukturmechanischen Finite-Elemente-Simulation eine virtuelle Kraftbeaufschlagung erfolgt, durch die das Werkstück in eine Kompensationsgeometrie entsprechend dem invertierten Abweichungsvektorfeld verformt wird, oder indem bei der strukturmechanischen Finite-Elemente-Simulation Verschiebungen, welche dem invertierten Abweichungsvektorfeld entsprechen, als Randbedingungen definiert werden.

Dabei ist zu beachten, welches Abweichungsvektorfeld invertiert wird und dass die Verschiebungs-Randbedingungen nur in einer Richtung eines Koordinatensystems definiert werden dürfen.

Gemäß einer präzisierten Formulierung kann dieser Aspekt somit auch so ausgedrückt werden, dass der Annäherungsschritt erfolgt, indem bei der strukturmechanischen Finite-Elemente-Simulation eine virtuelle Kraftbeaufschlagung erfolgt, durch die das Werkstück in eine Kompensationsgeometrie nicht streng, sondern im Sinne der Einräumung gewisser Freiheitsgrade nur näherungsweise mit dem invertierten Abweichungsvektorfeld verformt wird, oder indem bei der strukturmechanischen Finite-Elemente-Simulation Verschiebungen senkrecht zur Oberfläche der Nullgeometrie in nur eine Achsrichtung lokal definierter Koordinatensysteme, welche dem senkrecht zur Nullgeometrie invertierten Abweichungsvektorfeld entsprechen, als Randbedingungen definiert werden.

Schon eine einmalige Anwendung des Verfahrens kann im Vergleich zur herkömmlichen DA-Methode zu erheblich geringeren Abweichungen zwischen der Zielgeometrie und der mithilfe des kompensierten Werkzeugs erzielbaren Geometrie führen. Wird gemäß einer Ausführungsform mindestens eine weitere nichtlineare strukturmechanische Finite-Elemente-Simulation an dem Werkstück nach Abschluss einer ersten nichtlinearen strukturmechanischen Finite-Elemente-Simulation unter Verwendung des kompensierten Umformwerkzeugs mit einer Wirkfläche gemäß einer vorangegangenen nichtlinearen strukturmechanischen Finite-Elemente-Simulation durchgeführt, also mindestens ein weiterer Iterationsschritt, können die Abweichungen weiter verringert werden. Eine einzige weitere Iteration kann ausreichen, um eine Wirkfläche zu erhalten, deren Verwendung bei der praktischen Umformung dazu führt, dass die erzielte Geometrie des umgeformten Werkstücks im Rahmen der Toleranzen mit der Zielgeometrie übereinstimmt.

Das Arbeitsergebnis des Verfahrens ist eine Wirkfläche für das Umformwerkzeug bzw. eine diese Wirkfläche beschreibende Wirkflächengeometrie-Spezifikation. Die Erfindung betrifft auch ein Verfahren zur Herstellung eines Umformwerkzeugs, welches zur Herstellung eines komplexen Umformteils mit einer Zielgeometrie durch ziehtechnisches Umformen eines Werkstücks geeignet ist, wobei das Umformwerkzeug eine Wirkfläche zum Angreifen an das umzuformende Werkstück aufweist. Bei diesem Verfahren zur Herstellung eines Umformwerkzeugs wird eine Wirkflächengeometrie-Spezifikation bzw. die Wirkfläche gemäß dem computerbasierten Verfahren ermittelt und die Wirkfläche des realen Umformwerkzeugs wird gemäß der Wirkflächengeometrie-Spezifikation am realen Umformwerkzeug erzeugt.

Die Erfindung betrifft auch ein Verfahren zur Herstellung eines komplexen Umformteils mit einer Zielgeometrie durch ziehtechnisches Umformen eines Werkstücks unter Verwendung eines Umformwerkzeugs, welches eine Wirkfläche zum Angreifen an das umzuformende Werkstück aufweist, wobei ein Umformwerkzeug verwendet wird, das auf Basis des computerbasierten Verfahrens bzw. nach dem oben genannten Verfahren zur Herstellung eines Umformwerkzeugs hergestellt ist.

Die Fähigkeit zur Ausführung von Ausführungsformen der Erfindung kann in Form zusätzlicher Programmteile oder Programmmodule bzw. in Form einer Programmänderung in eine die Methode der Inversen Vektoren nutzende Simulationssoftware implementiert werden. Daher betrifft ein weiterer Aspekt der vorliegenden Erfindung ein Computerprogrammprodukt, welches insbesondere auf einem computerlesbaren Medium gespeichert oder als Signal verwirklicht ist, wobei das Computerprogrammprodukt, wenn es in den Speicher eines geeigneten Computers geladen und von einem Computer ausgeführt wird bewirkt, dass der Computer ein Verfahren gemäß der Erfindung bzw. einer bevorzugten Ausführungsform hiervon durchführt.

KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:

Fig. 1 zeigt ein durch ziehtechnisches Umformen herzustellendes Werkstück mit einem Hutprofil;

Fig. 2 zeigt eine schematische Darstellung zur Erläuterung einiger in dieser Anmeldung verwendeter Begriffe;

Fig. 3 bis 5 zeigen verschiedene Stufen einer simulierten Umformung und deren Bezug zur Nullgeometrie;

Fig. 6 zeigt eine Konfiguration nach Durchführung von zwei weiteren Kompensationsschleifen;

Fig. 7 zeigt verschiedene Bereiche eines fertigen Bauteils mit lokalen Abweichungen zwischen der mithilfe einer konventionellen DA-Methode erreichten finalen Geometrie und der angestrebten Zielgeometrie nach drei Kompensationsschleifen;

Fig. 8 zeigt die nach verschiedenen Iterationsstufen erzielten Veränderungen der Bauteilgeometrie;

Fig. 9 zeigt in Fig. 9A und Fig. 9B grafische Darstellungen zur Veranschaulichung von Aspekten einer nichtlinearen strukturmechanischen Finite-Elemente-Simulation;

Fig. 10 zeigt in Fig. 10A, Fig. 10B und Fig. 10C unterschiedliche Möglichkeiten für die Einwirkung von Kräften bei einer kräftebasierten Simulation;

Fig. 11 zeigt in Fig. 11A beispielhaft die Positionierung von Fixierungspunkten für eine nichtlineare strukturmechanische Finite-Elemente-Simulation am Beispiel eines Werkstücks in Form einer A-Säule und in Fig. 11B eine schematische Schnittdarstellung entlang der Linien A-A in Fig. 11A;

Fig. 12 zeigt in Fig. 12A und 12B Möglichkeiten zur Definition der Lage von Fixierungspunkten an einem Werkstück mit einem Hutprofil;

Fig. 13 zeigt in den Fig. 13A, 13B und 13C anschaulich die Nutzung von Stützelementen zur Definition einer als Zielkonfiguration dienenden dritten Konfiguration bei einer kräftebasierten Simulation;

Fig. 14 zeigt zum Zwecke eines direkten Vergleichs mit Fig. 15 nochmals das Ergebnis der herkömmlichen DA-Methode gemäß Fig. 5;

Fig. 15    zeigt zum Vergleich mit Fig. 14 das Ergebnis einer kräftebasierten Simulation gemäß einem Ausführungsbeispiel der Erfindung;

Fig. 16    zeigt analog zu Fig. 7 die lokalen Abweichungen zwischen einer erzielten finalen Geometrie und der Zielgeometrie an unterschiedlichen Bereichen eines Werkstücks nach Durchführung von zwei Kompensationsschleifen gemäß einer kräftebasierten Simulation;

Fig. 17    zeigt ein mögliches Knotenverschiebungsfeld der Rückfederung sowie ein knotenbasiertes inverses Vektorfeld ähnlich zu Fig. 2;

Fig. 18    zeigt die Ermittlung von Normal-Abweichungsvektoren bei einem Ausführungsbeispiel einer verschiebungsbasierten Simulation;

Fig. 19    zeigt schematisch lokale Koordinatensysteme orientiert an Normal-Abweichungsvektoren bei einer verschiebungsbasierten Simulation;

Fig. 20    zeigt die Ableitung von ersten Komponenten von Ziel-Verschiebungsvektoren aus Normal-Abweichungsvektoren bei einer verschiebungsbasierten Simulation;

Fig. 21    veranschaulicht die Ermittlung von zweiten und dritten Komponenten eines Ziel-Verschiebungsvektors bei einer verschiebungsbasierten Simulation; und

Fig. 22    zeigt schematisch einen Vergleich zwischen einem Teil eines Hutprofils, welches gemäß einer herkömmlichen DA-Methode und gemäß einer verschiebungsbasierten Simulation erzeugt wurde.

DETAILLIERTE BESCHREIBUNG DER AUSFÜHRUNGSBEISPIELE

Im Folgenden werden einige Ausführungsbeispiele zur Erläuterung von Möglichkeiten zur praktischen Umsetzung der Erfindung erläutert. Die vorgestellten Verfahren dienen zur rechnergestützten, simulationsbasierten Ermittlung einer Wirkfläche bzw. einer Wirkflächengeometrie eines realen Umformwerkzeugs, welches zur Herstellung eines komplexen Umformteils durch ziehtechnisches Umformen eines Werkstücks genutzt werden soll. Dazu wird die Geometrie der Wirkfläche eines virtuellen Umformwerkzeugs mittels Simulation berechnet. Die virtuelle Wirkfläche bzw. ihre Geometrie dient dann als Vorgabe bzw. Spezifikation für die Herstellung der Wirkfläche des realen Umformwerkzeugs.

Die gewünschte Form bzw. Gestalt des Werkstücks nach Abschluss des Umformvorgangs kann durch eine Zielgeometrie vorgegeben werden. Die vorgestellten Verfahren zielen auf eine geometrische Kompensation der Rückfederung des realen Werkstücks unter Berücksichtigung der Bauteilsteifigkeit, also der Steifigkeit des Werkstücks, ab. Die zur Erreichung einer geeigneten Korrekturgeometrie der Wirkfläche erforderliche Überbiegung wird durch eine statischmechanische Finite-Elemente-Simulation (FEM-Simulation) berechnet. Dabei bleibt der aus dem Stand der Technik bekannte Grundgedanke, die Werkzeuggeometrie um den Betrag der Rückfederung in entgegengesetzter Richtung zu verändern, als Teilschritt grundsätzlich bestehen. Anders als in bekannten Ansätzen des Stands der Technik wird die Korrekturgeometrie allerdings über einen physikalischen Ansatz ermittelt. Hierbei werden sowohl die Bauteilgeometrie als auch die Bauteilsteifigkeit berücksichtigt. Dadurch können gegenüber dem Stand der Technik wesentliche Verbesserungen der erzielbaren Werkstückgeometrie hinsichtlich Flächengleichheit bzw. Abwicklungsgleichheit der Korrekturgeometrie zur angestrebten Zielgeometrie erzielt werden. Die folgenden Beispiele illustrieren unterschiedliche Ansätze.

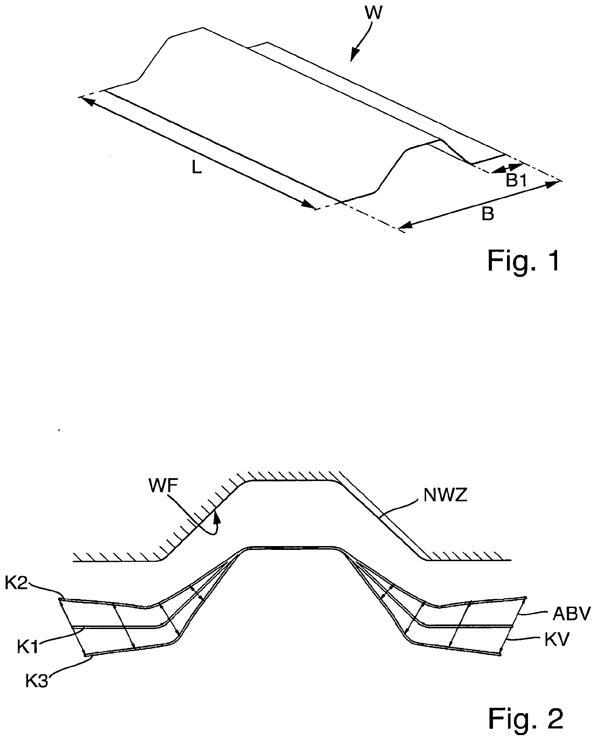

Viele der simulationsbasierten Untersuchungen erfolgten an einer relativ einfachen Werkstückgeometrie in Form eines Hutprofils W gemäß Fig. 1. Als Ausgangswerkstück wurde ein ebenes Blech eines hochfesten Stahlwerkstoffs mit Werkstoffbezeichnung HDT1200M und mit einer Blechdicke von 1 mm verwendet. Bei einer Gesamtlänge L = 400 mm soll das fertig gebogene Hutprofil zwischen seinen Längskanten eine Breite B von 216,57 mm haben. Die ebenen Teilabschnitte haben jeweils eine Breite B1 von 40 mm.

Für Zwecke des Vergleichs mit dem Stand der Technik wurde mithilfe der FE-Software *AutoForm*® ein Umformprozess simuliert, der unter anderem eine Ziehoperation sowie die Rückfederung des Werkstücks simuliert.

Zur besseren Verständlichkeit werden anhand von Fig. 2 einige in dieser Anmeldung verwendete Begriffe näher erläutert. Die angestrebte Zielgeometrie des fertigen Umformteils wird auch als Nullgeometrie des Werkstücks bezeichnet. Sie wird in dieser Anmeldung auch als erste Konfiguration K1 des Werkstücks bezeichnet. Ein Umformwerkzeug WZ, dessen zur Umformung dienende Wirkfläche WF die gleiche geometrische Gestalt hat wie die Nullgeometrie (erste Konfiguration) des Werkstücks, wird hier als Nullwerkzeug NWZ bezeichnet. Wird das Ausgangswerkstück (Blechplatine) mithilfe des Nullwerkzeugs NWZ verformt, so nimmt das verformte Blech bei noch geschlossenem Werkstück die Nullgeometrie und damit die erste Konfiguration K1 ein. Bei der Simulation entspricht dies einer ersten Umformoperation des Werkstücks mittels des Nullwerkzeugs NWZ zur Erzeugung der ersten Konfiguration K1 des Werkstücks.

Diese Konfiguration kann beim realen Bauteil nur bei geschlossenem Werkzeug aufrechterhalten bleiben und geht beim Öffnen des Werkzeugs durch elastische Rückfederung verloren. Simulationstechnisch wird eine elastische Rückfederung des Werkstücks aus der ersten Konfiguration in eine von externen Kräften weitgehend freie zweite Konfiguration K2 simuliert. Diese Simulation basiert auf einem elastisch-plastischen Materialmodell des Werkstücks, in welches bestimmte Materialeigenschaften einfließen, beispielsweise die Fließkurve, die Fließortkurve, der Elastizitätsmodul und/oder die Querkontraktionszahl. Diejenige Geometrie, die das Werkstück nach Entlastung, also im kräftefreien Zustand nach der ersten Umformoperation einnimmt, wird als Rückfederungsgeometrie bezeichnet und wird simulationstechnisch durch die zweite Konfiguration K2 repräsentiert.

Danach wird eine zu der zweiten Konfiguration K2 inverse dritte Konfiguration K3 berechnet. Dieser Verfahrensschritt kann analog zu der herkömmlichen Methode der inversen Vektoren (Displacement-Adjustment-Methode bzw. DA-Methode) stattfinden. Dabei werden zunächst Abweichungsvektoren ABV berechnet, die von einem Netzknoten der ersten Konfiguration K1 zu dem korrespondierenden Netzknoten der zweiten Konfiguration K2 führen, welche sich nach der Rückfederung ergibt. Die zu den einzelnen Netzknoten gehörenden Abweichungsvektoren ABV bilden ein Abweichungsvektorfeld. Aus den Abweichungsvektoren werden durch geometrische Invertierung bezüglich der ersten Konfiguration K1 Korrekturvektoren KV berechnet. Die Korrekturvektoren haben ihren Ursprung genau wie die zugehörigen Abweichungsvektoren in einem Netzknoten der ersten Konfiguration K1 und weisen in die entgegengesetzte Richtung wie die zugehörigen Abweichungsvektoren. Der Betrag des Vektors, also seine Länge, bleibt in der Regel jeweils erhalten. Es ist auch möglich, die Längen (Beträge) der Abweichungsvektoren mit einem Korrekturfaktor ungleich eins zu multiplizieren, z.B. mit Korrekturfaktoren aus dem Bereich von 0.7 bis 2.5. Diejenige Konfiguration, die sich durch Anwendung der Korrekturvektoren KV auf die zugehörigen Netzknoten der Nullgeometrie (erste Konfiguration K1) ergibt, ist die zu der zweiten Konfiguration K2 inverse dritte Konfiguration K3, die aus der Anwendung der DA-Methode resultiert.

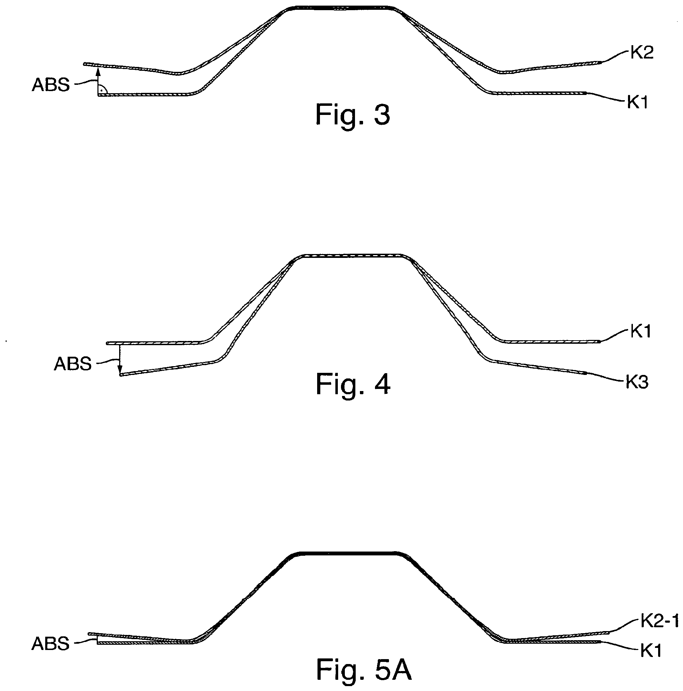

Bei dem hier dargestellten quantitativen Vergleichsbeispiel wurde das Ausgangswerkstück mit einem (unkompensierten) Nullwerkzeug simulationstechnisch in einer ersten Umformoperation verformt. Zur Quantifizierung und Bewertung der Rückfederung ist in Fig. 3 der maximale senkrechte Abstand ABS zur ersten Konfiguration K1 (Nullgeometrie) an der linken Seite gezeigt. Aufgrund der Spiegelsymmetrie des Werkstücks ergeben sich die gleichen Verhältnisse auf der rechten Seite. Der in Normalenrichtung zur ersten Konfiguration gemessene Abstand ABS darf nicht mit dem Abweichungsvektor ABV verwechselt werden, welcher zusammengehörige Netzknoten der ersten und zweiten Konfiguration verbindet. Im Beispielsfall betrug der Abstand ABS 13,8 mm.

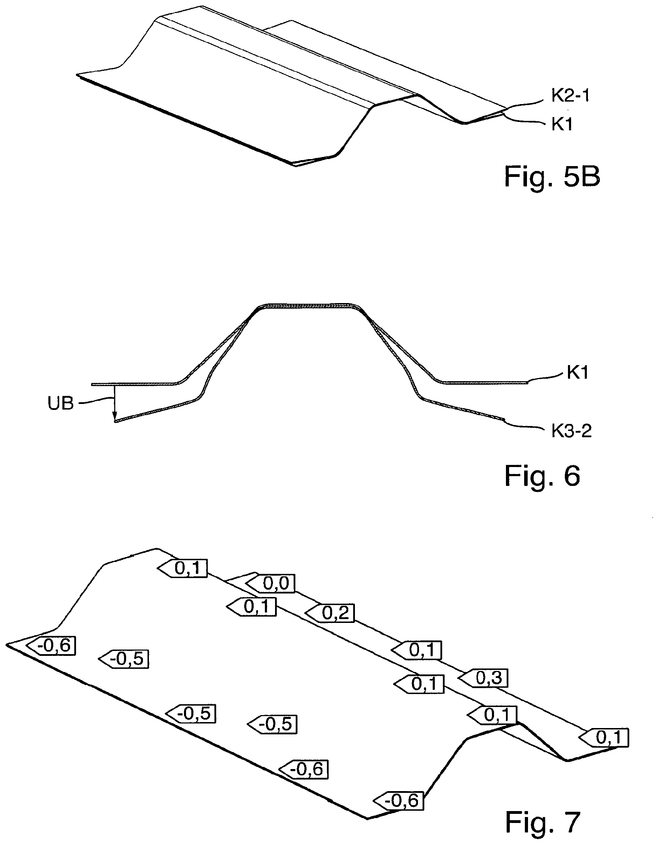

Bei der zu Vergleichszwecken durchgeführten Simulation basierend auf der Methode der inversen Vektoren (DA-Methode) erfolgte danach eine geometrische Kompensation der Werkzeugwirkflächen basierend auf einer rein mathematischen Invertierung des Abweichungsvektorfelds, wobei die Richtungen invertiert und die Beträge unverändert bleiben. Fig. 4 zeigt die korrespondierende dritte Konfiguration K3, die auf der der zweiten Konfiguration K2 gegenüberliegenden Seite der ersten Konfiguration K1 liegt. Wird das Werkstück nach Umformung mit diesem kompensierten Werkzeug entlastet, so stellt sich aufgrund elastischer Rückfederung die in Fig. 5 gezeigte Rückfederungskonfiguration K2-1 nach der ersten Kompensationsschleife ein. Nach der ersten Kompensationsschleife reduzierte sich der maximale, senkrechte Abstand ABS zur Nullgeometrie (erste Konfiguration K1) von 13,8 mm auf 4,2 mm.

Schon in Fig. 5A ist gut zu erkennen, dass sich die in Breitenrichtung gemessene Abwicklungslänge des umgeformten Profils gegenüber der Nullgeometrie vergrößert hat, so dass die in Längsrichtung verlaufenden Seitenkanten des umgeformten Profils weiter außen liegen als bei der Nullgeometrie (erste Konfiguration K1). Fig. 5B veranschaulicht die Verhältnisse ebenfalls. Die geometrische Kompensation mit der Displacement-Adjustment-Methode hatte eine Änderung der Abwicklungslänge um 2,36 % zur Folge, und zwar von 247,98 mm bei der Nullgeometrie (erste Konfiguration K1) auf 253,84 mm in der Konfiguration K2-1 nach Rückfederung.

Aufgrund des noch verbleibenden Fehlers von ca. 4 mm beim maximalen orthogonalen Abstand ABS wurden bei der Simulation zwei weitere Kompensationsschleifen durchlaufen, wodurch sich die in Fig. 6 dargestellte Korrekturgeometrie (dritte Konfiguration K3-2) für die Wirkfläche des Umformwerkzeugs ergab. Die Überbiegung UB am seitlichen Bauteilrand betrug dann ca. 20 mm. Nach diesen drei Kompensationsschleifen, die standardmäßig vom Hersteller der Simulationssoftware *AutoForm*® empfohlen werden, erfüllten nahezu alle Bauteilbereiche die im Karosseriebau typischerweise vorliegenden Form- und Maßanforderungen an Anschlussflächen und Funktionsflächen. Diese Anforderungen liegen derzeit bei ca. ± 0,5 mm.

Fig. 7 zeigt für verschiedene Bereiche des fertigen Bauteils die lokal vorliegenden Abstände der tatsächlich erreichten finalen Geometrie zur angestrebten Zielgeometrie nach drei Kompensationsschleifen.

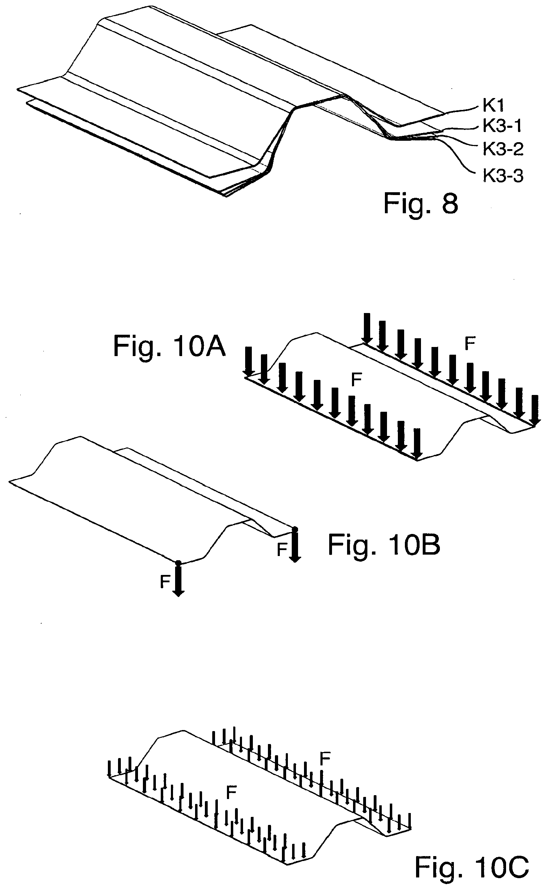

Es zeigte sich, dass die Abweichungen der Abwicklungslängen über die verschiedenen Iterationen bzw. Kompensationsschleifen sukzessive geringer wurden. Sie konnten jedoch nicht vollständig eliminiert werden. Fig. 8 veranschaulicht die Verhältnisse grafisch. Bei einer Abwicklungslänge der ersten Konfiguration K1 (Nullgeometrie) von 247,98 mm betrug die Abwicklungslänge der dritten Konfiguration K3-1 nach der ersten Kompensation 253,84 mm, nach der zweiten Kompensationsschleife (dritte Konfiguration K3-2) noch 251,73 mm und nach der dritten Korrekturschleife (dritte Konfiguration K3-3) noch 249,57 mm. Die prozentuale Abweichung der Abwicklungslängen der Korrekturgeometrien zur Nullgeometrie konnte also von ca. 2,4 % über ca. 1,5 % auf etwa 0,6 % prozentuale Abweichung reduziert werden.

Signifikante Verbesserungen in Richtung auf eine Flächengleichheit bzw. Abwicklungsgleichheit zwischen der praktisch erzielten finalen Geometrie und der Nullgeometrie (erste Konfiguration) können erzielt werden, wenn eine geometrische Kompensation der Rückfederung nicht ausschließlich rein geometrisch, sondern unter Berücksichtigung der Werkstücksteifigkeit erfolgt. Anhand der nachfolgenden Figuren werden zwei vorteilhafte Ausgestaltungen dieser Vorgehensweise erläutert.

Bei beiden hier dargestellten Ausführungsbeispielen schließt sich an die Berechnung von Abweichungsvektoren und dazu inversen Vektoren eine nichtlineare strukturmechanische Finite-Elemente-Simulation (NLSM-FEM-Simulation) an.

Bei einem ersten Ausgestaltungprinzip (kräftebasierte Simulation) wird dabei innerhalb der nichtlinearen-strukturmechanischen FE-Simulation die erste Konfiguration oder zweite Konfiguration (Null- oder Rückfederungsgeometrie) in eine Korrekturgeometrie verformt, die im Rahmen eines vorgebbaren Toleranzbereichs der dritten Konfiguration K3 liegt, also derjenigen Konfiguration, die sich nach der Methode der inversen Vektoren berechnen lässt.

Bei einem zweiten Ausgestaltungsprinzip (verschiebungsbasierte Simulation) wird ebenfalls die erste Konfiguration oder zweite Konfiguration (Null- oder Rückfederungsgeometrie) in eine Korrekturgeometrie verformt, jedoch ohne die Notwendigkeit der Berücksichtigung eines Toleranzbereichs.

Zum besseren Verständnis seien nachfolgend einige Aspekte der Nutzung der NLSM-FEM-Simulation im Rahmen von Verfahren der vorliegenden Anmeldung erläutert. Es wurde erkannt, dass es mithilfe der NLSM-FEM-Simulation möglich ist, bei der Erzeugung der Kompensationsgeometrie außer der Werkstückgeometrie auch das mechanische Verhalten des Werkstücks in die Berechnung der Kompensationsgeometrie mit einzubeziehen. Dies wird durch die Berücksichtigung der Werkstücksteifigkeit (kurz: Steifigkeit) erreicht. Dafür kommt die nichtlineare Finite-Elemente-Methode als numerisches Werkzeug zum Einsatz. Der Zusammenhang zwischen Kräften und Verschiebungen wird sowohl im Kontinuum als auch in der diskretisierten Gesamtstruktur sowie im einzelnen Element rechnerisch ganz allgemein durch die Steifigkeit hergestellt. Die Steifigkeit beschreibt das Last-Verformungsverhalten eines Elements bzw. eines Körpers. Die Kraft-Verschiebungs-Beziehung einer Gesamtstruktur lautet:

$$\mathbf{F} = \mathbf{K} \cdot \mathbf{U} \tag{1}$$

mit

$\mathbf{F}$ = Spaltenvektor aller Elementknotenkräfte,
$\mathbf{K}$ = Struktursteifigkeitsmatrix,
$\mathbf{U}$ = Spaltenvektor aller Elementknotenverschiebungen.

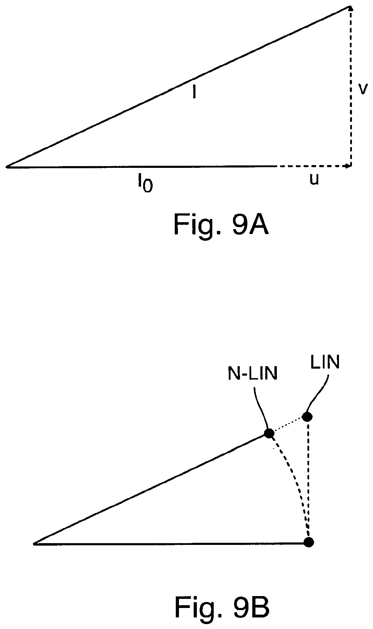

Bei der nichtlinearen FEM werden unter anderem geometrische Nichtlinearitäten als Folge großer Drehungen berücksichtigt. Dafür werden Dehnungen mit Hilfe der *Green-Lagrange-Dehnungen* beschrieben. Die Herleitung geht von der Veränderung des Quadrates des Abstandes zweier benachbarter Punkte aus. Die bezogene Änderung der Quadrate $\Delta$ der beiden Längen (verformt $l$, unverformt $l_0$) ist (vgl. Fig. 9A):

$$\Delta = \frac{l^2 - l_0^2}{l_0^2} = 2\frac{u}{l_0} + \left(\frac{u}{l_0}\right)^2 + \left(\frac{v}{l_0}\right)^2 \quad \rightarrow \quad \Delta = 2\frac{du}{dx} + \left(\frac{du}{dx}\right)^2 + \left(\frac{dv}{dx}\right)^2 \tag{2}$$

$$\varepsilon_{xx}^{\text{nichtlinear}} = \frac{du}{dx} + \frac{1}{2}\left(\frac{du}{dx}\right)^2 + \frac{1}{2}\left(\frac{dv}{dx}\right)^2 \quad \text{(im Zweidimensionalen)} \tag{3}$$

Der Einfluss der Größe $\varepsilon_{xx}^{\text{nichtlinear}}$ wird in Fig. 9B durch den Punkt N-LIN repräsentiert. Bei kleinen Verformungen werden die Quadrate vernachlässigbar, sodass nur der erste Term übrig bleibt.

$$\varepsilon_{xx}^{\text{linear}} = \frac{du}{dx} \tag{4}$$

Der Einfluss der vernachlässigten Terme wird durch den Punkt LIN in Fig. 9B repräsentiert. Bei Anwendung der linearen FEM zur Erzeugung einer Kompensationsgeometrie würde es wie auch bei der strengen geometrischen Umkehrung zu Abwicklungsfehlern und Flächenfehlern kommen. Dies wird durch Berücksichtigung der quadratischen Glieder der *Green-Lagrange-Dehnung* vermieden, welche dafür sorgen, dass Starrkörperrotationen mit beliebigen Drehwinkel keine Dehnung erzeugen.

Die Green-Lagrange-Dehnung führt bei der Herleitung der Struktursteifigkeitsmatrix K zu einem zusätzlichen Term, der Spannungsmatrix $K_\sigma$.

Für ein diskretisiertes mechanisches Problem lautet die Gleichgewichtsbedingung zur Herleitung der Struktursteifigkeitsmatrix K:

$$f_{int}(\overline{u}) = f_{ext}(\overline{u}) \rightarrow d(\overline{u}) = f_{int}(\overline{u}) = f_{ext}(\overline{u}) = 0, \tag{5}$$

mit

$f_{int}$ - innere Knotenkräfte,
$f_{ext}$ = externe Kräfte,
$\overline{u}$ = Verschiebungsvektor.

Die Steifigkeitsmatrix K als Ableitung der inneren Kräfte $f_{int}$ erhält man im allgemeinen Fall als:

$$\mathbf{K} = \frac{d}{d\overline{u}} \cdot f_{int} - \frac{d}{d\overline{u}} \cdot f_{ext} = \underbrace{\int_{(V)} \left(\frac{d\varepsilon}{d\overline{u}}\right)^T E \left(\frac{d\varepsilon}{d\overline{u}}\right) dV}_{\mathbf{K_u}} + \underbrace{\int_{(V)} \frac{d\left(\frac{d\varepsilon}{d\overline{u}}\right)^T}{d\overline{u}} \sigma \, dV}_{\mathbf{K_\sigma}} - \underbrace{\frac{d\varepsilon}{d\overline{u}} f_{ext}}_{\mathbf{K_p}} \tag{6}$$

Mit

$f_{int}$ = innere Knotenkräfte,

$f_{ext}$ = externe Kräfte,

$\overline{u}$ = Verschiebungsvektor,

$\varepsilon$ = Dehnungsvektor,

$\sigma$ = Spannungsvektor,

$\mathbf{E}$ = Elastizitätsmatrix,

$\mathbf{K_u}$ = Verschiebungsmatrix,

$\mathbf{K_\sigma}$ = Spannungsmatrix,

$\mathbf{K_p}$ = Lasttangente.

Die Verschiebungsmatrix $\mathbf{K_u}$ ist formal der linearen Steifigkeitsmatrix sehr ähnlich. Die Spannungsmatrix $\mathbf{K_\sigma}$ heißt manchmal auch geometrische Matrix, weil nur bei geometrischer Nichtlinearität die Ableitung der Dehnung nach den Knotenverschiebungen von den Verschiebungen abhängig ist und somit die Ableitung und $\mathbf{K_\sigma}$ existieren.

Somit kann die Berücksichtigung der Werkstücksteifigkeit über die Steifigkeitsmatrix **K** als Funktion der Spannungsmatrix $\mathbf{K_\sigma}$ bei Anwendung der nichtlinearen FEM zu Flächen- und Abwicklungsgleichheit der Korrekturgeometrie zur Nullgeometrie führen.

Für die Durchführung der nichtlinearen strukturmechanischen Finite-Elemente-Simulation werden drei oder mehr Fixierungspunkte der ersten oder der zweiten Konfiguration definiert. Ein Fixierungspunkt zeichnet sich dadurch aus, dass er bei der nichtlinearen strukturmechanischen FE-Simulation bezüglich seiner Lage unverändert bleibt, also keine Veränderung seiner Lage im Raum erfährt. Die erste oder zweite Konfiguration wird in den mindestens drei Fixierungspunkten fixiert, so dass deren Ortskoordinaten sich während der nichtlinearen strukturmechanischen Finite-Elemente-Simulation nicht verändern. Die Konfiguration des Werkstücks wird dann außerhalb der Fixierungspunkte an die dritte Konfiguration angenähert bis zum Erreichen der Zielkonfiguration. Diese Annäherung erfolgt mithilfe einer Berechnung von Kräften oder Verschiebungen unter Berücksichtigung der Steifigkeit des Werkstücks, also nach einem physikalischen Ansatz, der über rein geometrische Ansätze hinausgeht. Die nach dieser Annäherung erzielte Zielkonfiguration wird dann als Wirkfläche für das reale Umformwerkzeug festgelegt.

Anhand der Fig. 10 bis 16 wird zunächst eine erste Ausführungsform näher erläutert, bei der simulativ Kräfte in Form von Linienlasten (vgl. Fig. 10A), Punktlasten (vgl. Fig. 10B) und/oder Flächenlasten (vgl. Fig. 10C) auf die zu verformende Konfiguration aufgebracht werden. Als Ausgangsgeometrie für die nichtlineare strukturmechanische FE-Simulation kann entweder die Null- oder Rückfederungsgeometrie verwendet werden.

Um im Wege der Simulation eine Annäherung der Konfiguration des Werkstücks an die Zielkonfiguration zu ermöglichen, werden die erste Konfiguration (Nullgeometrie) und die zweite Konfiguration (Rückfederungsgeometrie) zur Berechnung der Überbiegung in geeigneter Weise "gelagert", und zwar in Fixierungspunkten. Die möglichen Positionen von Fixierungspunkten werden vorzugsweise auf Basis einer Best-Fit-Ausrichtung der zweiten Konfiguration (Rückfederungsgeometrie) zur ersten Konfiguration (Nullgeometrie) festgelegt. Dazu wird zunächst ein regionaler oder globaler Anpassungsbereich festgelegt, in welchem eine Anpassung zwischen der ersten Konfiguration und der zweiten Konfiguration erfolgen soll. Danach werden die erste Konfiguration und die zweite Konfiguration relativ zueinander derart ausgerichtet, dass nach Maßgabe eines Abweichungskriteriums in dem Anpassungsbereich eine minimale geometrische Abweichung zwischen der ersten Konfiguration und der zweiten Konfiguration vorliegt. Vorzugsweise wird hierzu die Methode der kleinsten Fehlerquadrate im Anpassungsbereich angewendet, wodurch die erste und die zweite Konfiguration zueinander so ausgerichtet werden, dass in Summe nach der Methode der kleinsten Fehlerquadrate die geringsten Abweichungen entstehen.

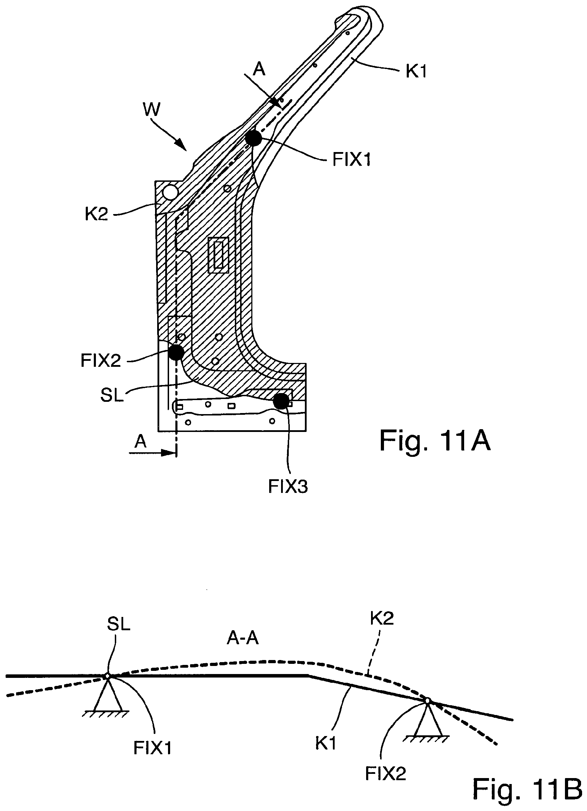

Zur Veranschaulichung zeigt Fig. 11A beispielhaft die Positionierung von Fixierungspunkten für die nichtlineare strukturmechanische Finite-Elemente-Simulation am Beispiel eines Werkstücks W in Form einer A-Säule. Bei diesem komplex geformten Bauteil erfolgt die Anpassung über das gesamte Bauteil hinweg, was hier als globaler Anpassungsbereich bezeichnet wird. In der Draufsicht in Fig. 11A repräsentieren die schraffierten Bereiche diejenigen Bereiche, in welchen die Rückfederungsgeometrie (zweite Konfiguration) dem Betrachter näher liegt als die darunterliegende Nullgeometrie (erste Konfiguration). In den nicht schraffierten Bereichen liegt dagegen die Nullgeometrie (erste Konfiguration) dem Betrachter näher. Die Situation ist anhand der Schnittdarstellung in Fig. 11B gut zu erkennen. Es ist erkennbar, dass sich die Rückfederungsgeometrie (zweite Konfiguration K2) und die Nullgeometrie (erste Konfiguration K1) entlang von Nulldurchgängen bzw. Schnittlinien SL durchdringen. Alle Punkte auf den Schnittlinien sind somit der Nullgeometrie und der Rückfederungsgeometrie gemeinsam. Sie markieren nach der Anpassung die Bereiche minimaler geometrischer Abweichung zwischen der ersten Konfiguration und der zweiten Konfiguration, wobei hier die Abweichung gleich null ist.

Diese Bereiche minimaler geometrischer Abweichung stellen bevorzugte Orte zur Positionierung von Fixierungspunkten dar. Die Positionen von Fixierungspunkten werden nun vorzugsweise entlang der Schnittlinien derart ausgewählt, dass sich zumindest eine Dreiecksanordnung mit drei Fixierungspunkten FIX1, FIX2, FIX3 ergibt. Durch die Verwendung von drei Fixierungspunkten kann eine statische Überbestimmung und ein Verdrücken der Rückfederungsgeometrie vermieden werden. Die drei Fixierungspunkte sollen ein möglichst großes Dreieck aufspannen, um eine möglichst stabile Bauteillage während der Simulation zu gewährleisten. Kann eine stabile Bauteillage über drei Fixierungspunkte nicht erreicht werden, kann mindestens ein weiterer Fixierungspunkt genutzt werden. Fig. 11A zeigt eine mögliche Positionierung der Fixierungspunkte für die nichtlineare strukturmechanische Finite-Elemente-Simulation

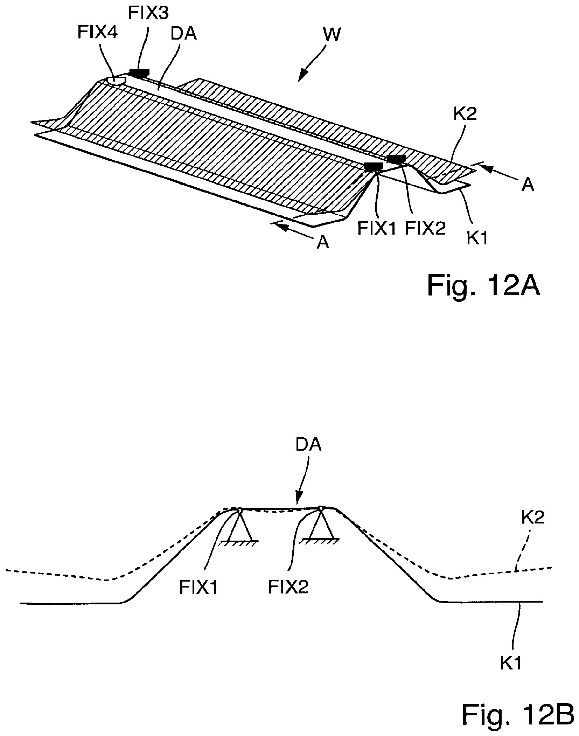

Fig. 12 zeigt ein anderes Beispiel für die Definition von Fixierungspunkten im Rahmen der nichtlinearen strukturmechanischen Finite-Elemente-Simulation. Das Werkstück W ist hier ein Hutprofil, welches eine Spiegelsymmetrie bezüglich einer Spiegelebene aufweist, die mittig zwischen den Längskanten senkrecht zur Fußebene des Hutprofils verläuft. Bei derartig symmetrisch gestalteten Bauteilen kann es ausreichen, für die Definition von Fixierungspunkten nur einen Ausschnitt der Gesamtfläche auszuwählen, also einen regionalen Anpassungsbereich, der im Beispielsfall symmetrisch zur Symmetrieebene liegt und nur den Dachabschnitt DA des Hutprofils umfasst. Wie in der Schnittdarstellung von Fig. 12B zu erkennen ist, schneiden sich die Nullgeometrie (erste Konfiguration K1) und die Rückfederungsgeometrie (zweite Konfiguration K2) entlang von zwei symmetrisch zur Spiegelebene parallel zu den Längskanten verlaufenden Schnittlinien. Es werden insgesamt vier Fixierungspunkte definiert, wobei die Fixierungspunkte FIX1, FIX2 und FIX3 eine Dreiecksanordnung bilden und ein weiterer Fixierungspunkt FIX4 als Hilfs-Fixierungspunkt zur Wahrung der Spiegelsymmetrie und der Stabilität hinzugekommen ist.

Der Anpassungsbereich sollte so gewählt werden, dass bei der nachfolgenden virtuellen Verformung der Einfachheit halber die Kräfte jeweils nur von einer Seite an dem Werksstück angreifen.

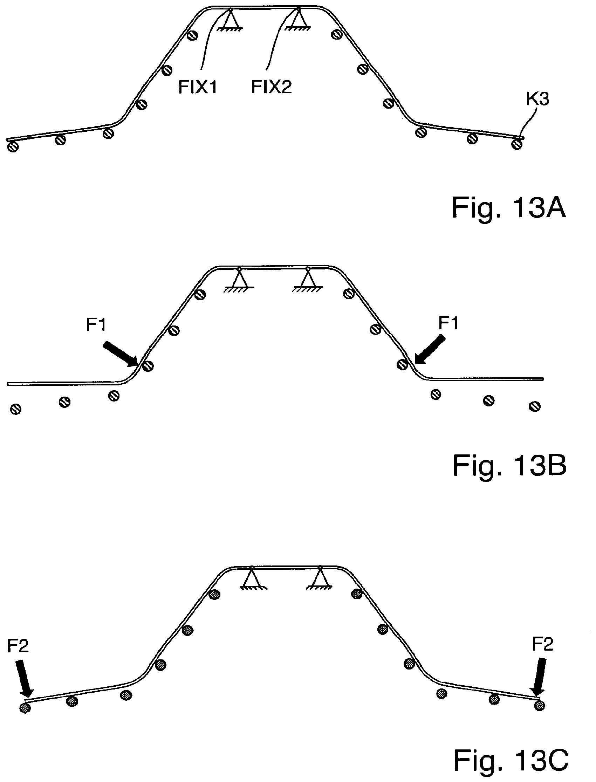

Am Beispiel des Hutprofils aus Fig. 12 werden nun anhand der nachfolgenden Figuren die nächsten Schritte der Simulation erläutert. Die Überbiegung wird durch einen iterativen Prozess erzeugt. Dabei werden die zur Überbiegung erforderlichen Kräfte $F_1$, $F_2$ etc. gleichzeitig oder sequenziell auf die umzuformende Geometrie bzw. Konfiguration aufgebracht. Als Orientierung für die Überbiegung dienen im Beispiel von Fig. 13 (virtuelle) Stützelemente SE, welche auf Basis der Korrekturgeometrie nach der DA-Methode, also gemäß der dritten Konfiguration K3, erzeugt und (virtuell) im Raum platziert werden. Alternativ kann auch die dritte Konfiguration, also die Korrekturgeometrie nach der DA-Methode selbst, zur Orientierung genutzt werden.

Fig. 13A zeigt schematisch Stützelemente SE, die mit gegenseitigem Abstand zueinander angeordnet sind und dadurch ein Stützelement-Raster bilden, wobei jedes Stützelement eine Position auf der Zielkonfiguration (dritte Konfiguration) repräsentiert. Ein Vorteil der Nutzung von Stützelementen besteht darin, dass sie die Erzeugung der Korrekturgeometrie durch Verformen der Null- oder Rückfederungsgeometrie (zweite Konfiguration) ohne aufwändige Berechnung der erforderlichen Beträge und Richtungen der zur Verformung genutzten Kräfte ermöglichen. Die Stützelemente dienen als virtuelle "Anschlagselemente", wobei die Verformung lokal beendet wird, wenn durch die sich verändernde Konfiguration ein Stützelement erreicht ist.

Die Fig. 13B und 13C zeigen beispielhaft eine sequenzielle Krafteinleitung zur Überbiegung der Konfiguration bis zum Anliegen an den Stützelementen. Dabei wird ausgehend von den Fixierungspunkten FIX1, FIX2 zunächst in näher bei den Fixierungspunkten gelegenen Bereichen eine Kraft $F_1$ aufgebracht. Danach werden sukzessive in weiter außen gelegenen Krafteinleitungsbereichen Verformungskräfte aufgebracht, wie beispielsweise die Verformungskraft $F_2$ in der Nähe der Längskanten des Hutprofils (Fig. 13C).

Die Positionierung der Stützelemente für die Simulation erfolgte in Abhängigkeit des Verschiebungsvektorfelds der Rückfederung und der Bauteilgeometrie. Zunächst wurde in Abhängigkeit von der Bauteilgröße ein geeignetes Raster für die Stützelemente definiert. Es hat sich als zweckmäßig herausgestellt, wenn anschließend ggf. Stützelemente an ungeeigneten Bauteilbereichen entfernt werden. Dies können beispielsweise Bauteilbereiche mit großen lokalen Krümmungen (beispielsweise infolge von Verprägungen) sein. Bei einer Variante erfolgte die Definition/Identifikation dieser (für Stützelemente nicht geeigneten) Bereiche auf Basis der Winkel zwischen den Verschiebungsvektoren. Hierfür wurde ein maximal zulässiger Winkel zwischen benachbarten Verschiebungsvektoren definiert. An Positionen, an denen der maximal zulässige Winkel überschritten wurde, wurde kein Stützelement vorgesehen bzw. ein im Raster eigentlich vorgesehenes Stützelement entfernt.

Wurde die Nullgeometrie (erste Konfiguration) durch die in Form von Randbedingungen definierten Verschiebungen in der Finite-Elemente-Software überbogen, werden die Verschiebungen der Knoten im globalen Koordinatensystem sowie die Koordinaten der den Verschiebungen zugehörigen Knoten aus der Finite-Elemente-Software ausgelesen. Anschließend können mithilfe einer CAD-Software, beispielsweise CATIA® RSO, mithilfe der Verschiebungen und der Koordinaten die Wirkflächen abgeleitet werden. Dies ermöglicht die Ausgabe der erzeugten Korrekturgeometrie in einem zur weiteren Verwendung passenden Flächenformat. Auf diese Weise kann eine Wirkfläche bzw. eine Wirkflächengeometrie-Spezifikation für die Wirkfläche eines realen Umformwerkzeugs ermittelt werden, welches dann zur Herstellung eines komplexen Umformteils durch ziehtechnisches Umformen eines Werkstücks dienen kann und das Werkstück so umformt, dass nach der Umformung die gewünschte Zielgeometrie im Rahmen der Toleranzen vorliegt. Liegt nach der ersten Kompensation kein form- und maßhaltiges Bauteil (im Rahmen der Toleranzen) vor, kann wenigstens eine weitere Kompensationsschleife nach der hier dargelegten Strategie durchlaufen werden.

Bei dem hier beispielhaft dargestellten Verfahren wird die Korrekturgeometrie nicht durch eine strenge geometrische Invertierung des Abweichungsvektorfelds (wie bei der DA-Methode) erzeugt, sondern dadurch, dass die Rückfederungsgeometrie durch geeignete virtuelle Kraftbeaufschlagung der Kompensationsgeometrie nach der DA-Methode ausreichend gut angenähert wird. Diese virtuelle Kraftbeaufschlagung kann beispielsweise als zusätzliches Programmmodul in einer geeigneten Simulationssoftware wie zum Beispiel *AutoForm®* implementiert sein.

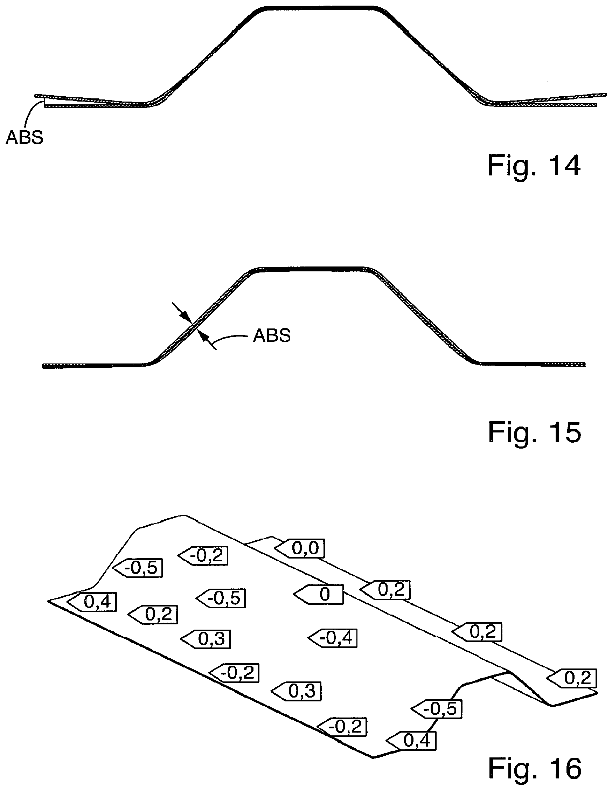

Um einen quantitativen Vergleich mit herkömmlichen Methoden zu erlauben, wurde das im Zusammenhang mit den Fig. 1 bis 9 dargestellte Werkstück W (Hutprofil) nach dem oben beschriebenen Verfahren mithilfe virtueller Kraftbeaufschlagung umgeformt. Zum anschaulichen Vergleich zeigt Fig. 14 nochmals das Ergebnis der herkömmlichen Methode (gemäß Fig. 5) in einer maximalen orthogonalen Abweichung ABS von ca. 4,2 mm in der Nähe der Längsränder des Hutprofils und einem deutlich erkennbaren Abwicklungsfehler. Fig. 15 zeigt in vergleichbarer Darstellung die Abstände zwischen der erzielten Konfiguration und der Konfiguration nach der ersten geometrischen Kompensation gemäß dem hier dargestellten Verfahren mit Berücksichtigung der Steifigkeit des Werkstücks. Der Bereich maximaler Abweichung liegt nun in den Schrägflächen des Hutprofils, wo die maximale Abweichung (maximaler senkrechter Abstand ABS) noch ca. 0,8 mm beträgt. Der Vergleich der Abstände zur Soll-Geometrie nach der ersten geometrischen Kompensation zeigt in diesem Beispiel also eine circa viermal geringere Abweichung im Vergleich zur herkömmlichen DA-Methode.

Aufgrund des noch verbleibenden Fehlers von ca. 0,8 mm wurde eine weitere Kompensationsschleife gemäß dem hier vorgestellten Verfahren unter Berücksichtigung der Werkstücksteifigkeit durchlaufen. Das Ergebnis ist in Fig. 16 gezeigt. Nach der zweiten Kompensationsschleife erfüllten nahezu alle Bauteilbereiche die im Karosseriebau standardmäßigen Form- und Maßanforderungen an Anschluss- und Funktionsflächen von ± 0,5 mm. Abbildung 16 zeigt für einige ausgewählte Bereiche den lokalen Abstand zwischen der erzielten Geometrie und der Soll-Geometrie nach der zweiten Kompensationsschleife.

Der quantitative Vergleich anhand der maximalen Abweichung zur Soll-Geometrie belegt anschaulich die erzielbaren Vorteile des neuen Verfahrens. Mit der herkömmlichen DA-Methode konnte nach den typischerweise standardmäßig vorgegebenen drei Iterationsschleifen der Abstand zur Soll-Geometrie von ursprünglich ca. 13,8 mm auf 0,7 mm reduziert werden. Mit dem neuen Verfahren konnte der Abstand zur Soll-Geometrie bereits nach zwei Iterationsschleifen auf maximal 0,5 mm reduziert werden, so dass eine dritte Korrekturschleife entfallen kann.

Ein Vergleich der Abwicklungslängen der Nullgeometrie (erste Konfiguration) und der erzielten Korrekturgeometrie nach der ersten Kompensationsschleife zeigt ebenfalls erhebliche Verbesserungen. Die Abwicklungslänge der Korrekturgeometrie (247,794 mm) unterschied sich nur um 0,08 % von der Abwicklungslänge der Nullgeometrie (247,984 mm). Diese Restabweichung ist im Wesentlichen auf das Nachkonstruieren der aus der Simulationssoftware ausgelesenen Geometrie zurückzuführen, so dass für praktische Zwecke davon ausgegangen werden kann, dass mit dem Verfahren die Möglichkeit bereitgestellt wird, dass die hiermit hergestellten Bauteile auch bei größeren Rückfederungen weitestgehend flächengleich bzw. für alle praktischen Zwecke flächengleich mit der für das Bauteil angestrebten Nullgeometrie sein können.

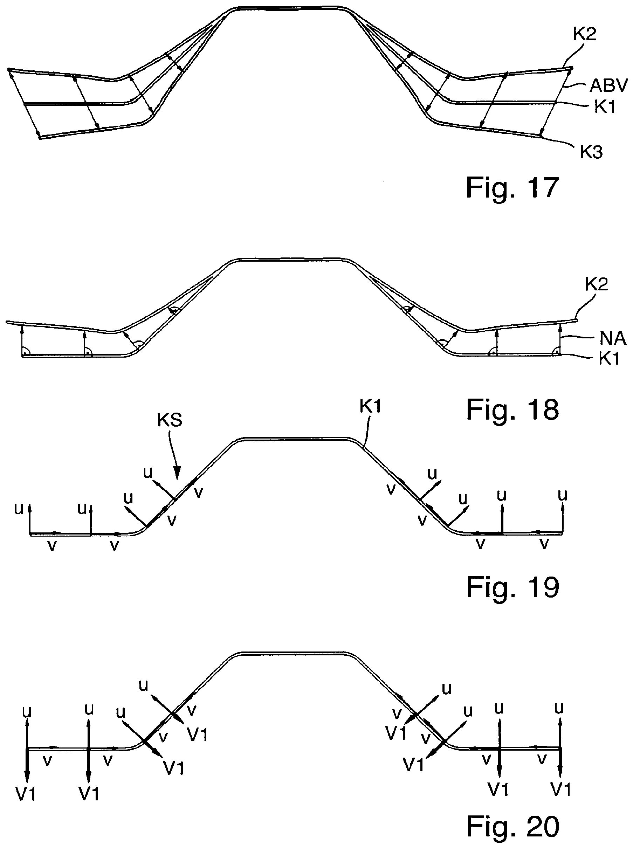

Anhand der Fig. 17 ff. wird als weiteres Ausführungsbeispiel ein verschiebungsbasierter Kompensationsansatz erläutert, bei welchem, anders als beim obigen Ausführungsbeispiel, zur Berechnung der Vorgänge bei der Überbiegung der Nullgeometrie keine Kräfte als Randbedingungen in der Finite-Elemente-Software genutzt werden. Stattdessen werden Verschiebungen genutzt, wobei diese - ähnlich wie beim ersten Ausführungsbeispiel - unter Berücksichtigung der Bauteilsteifigkeit realisiert werden. Beträge, Richtungen und Angriffspunkte der Verschiebungen werden auf Basis eines Verschiebungsvektorfelds der Rückfederung abgeleitet. Für die virtuelle "Lagerung" der Nullgeometrie oder Rückfederungsgeometrie an Fixierungspunkten können die gleichen Konzepte genutzt werden wie beim ersten Ausführungsbeispiel, so dass insoweit zur Vermeidung von Wiederholungen auf die dortige Beschreibung (zum Beispiel im Zusammenhang mit den Fig. 11 und 12) verwiesen wird.

Zunächst erfolgt (bei der hier betrachteten Variante) eine Berechnung des Abweichungsvektorfelds mit Abweichungsvektoren ABV zwischen Netzknoten der ersten Konfiguration K1 (Nullkonfiguration) und den zugeordneten Netzknoten der zweiten Konfiguration K2, also das Knotenverschiebungsvektorfeld der Rückfederung entsprechend der DA-Methode. Die Koordinaten der zugehörigen Knoten des FE-Netzes aus der Umformsimulation werden ausgelesen. Liegt kein FE-Netz vor, zum Beispiel bei einer optischen Vermessung der Rückfederungsgeometrie, können die Nullgeometrie (erste Konfiguration) und die Rückfederungsgeometrie (zweite Konfiguration) zunächst durch eine Ansammlung von topologischen Punkten beschrieben werden. Fig. 17 veranschaulicht beispielhaft das Knotenverschiebungsvektorfeld der Rückfederung analog zu Fig. 2.

Aus dem Verschiebungsvektorfeld der Rückfederung, welches die Verschiebung von Werkstückknoten bzw. Oberflächenpunkten im Raum vor und nach der Rückfederung eindeutig definiert, wird ein Vektorfeld berechnet, welches eine Vielzahl von Vektoren enthält, die an ausgewählten Orten der ersten Konfiguration senkrecht zu der durch die erste Konfiguration K1 definierten Fläche stehen. Diese orthogonal zur ersten Konfiguration K1 ausgerichteten Vektoren werden hier als Normal-Abweichungsvektoren NA bezeichnet, das zugehörige Vektorfeld ist das Normal-Abweichungsvektorfeld. Fig. 18 zeigt schematisch Normal-Abweichungsvektoren NA dieses Normal-Abweichungsvektorfelds senkrecht zur Oberfläche der Nullgeometrie.

Ein Normal-Abweichungsvektor kann z.B. durch Zerlegung eines Knotenverschiebungsvektors der Rückfederung berechnet werden, indem dessen senkrecht zur ersten Konfiguration gerichtete Komponente als Normal-Abweichungsvektor definiert wird. Normal-Abweichungsvektoren können auch unabhängig von Positionen von Netzknoten als Normalenvektoren zur ersten Konfiguration an beliebiger anderer Stelle definiert sein.

In einem nächsten Schritt wird auf Basis der ausgelesenen Verschiebungen des Normal-Abweichungsvektorfelds die erforderliche Überbiegung der Nullgeometrie mithilfe einer Finite-Elemente-Software simulativ berechnet. Dafür werden in der Finite-Elemente-Software lokale Koordinatensysteme KS definiert, wobei jeweils eine Koordinatenachse (im Beispiel von Fig. 19 die u-Achse) in Richtung des lokalen Koordinatensystems des ausgehenden Normal-Abweichungsvektors der Rückfederung zeigt, also senkrecht zur Oberfläche der ersten Konfiguration K1 bzw. Nullgeometrie.

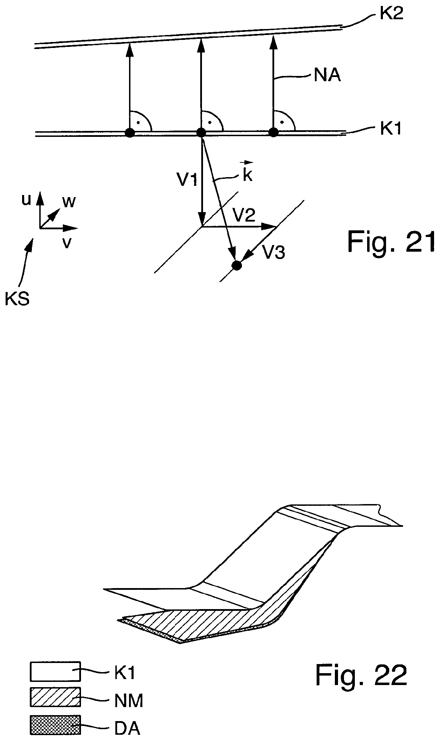

In einem nächsten Schritt werden an den Positionen der lokalen Koordinatensysteme KS Verschiebungen als Randbedingungen in der Finite-Elemente-Software definiert. Diese Verschiebungen $V_1$ werden in entgegengesetzter Richtung der korrespondierenden Normal-Abweichungsvektoren NA, aber mit identischem Betrag festgelegt. Fig. 20 zeigt diesen Verfahrensschritt schematisch. Hierbei ist maßgeblich, dass bei der Berechnung, d.h. in der betreffenden Finite-Elemente-Software, diese Verschiebungen $V_1$ nur in eine Richtung der lokalen Koordinatensysteme definiert werden. Die beiden anderen Richtungen werden als freie Variablen definiert. Es wird somit nur eine erste Komponente (hier $V_1$) eines gesuchten Ziel-Verschiebungsvektors $\vec{k} = (v_1, v_2, v_3)$ festgelegt, und zwar durch geometrische Invertierung von Normal-Abweichungsvektoren NA des Normal-Abweichungsvektorfelds bezüglich der ersten Konfiguration K1. Fig. 21 zeigt eine anschauliche Darstellung des gesuchten Ziel-Verschiebungsvektors $\vec{k}$ und seiner Komponenten $v_1, v_2, v_3$

im lokalen Koordinatensystem KS basierend auf den Normal-Abweichungsvektoren NA des Normal-Abweichungsvektorfelds zwischen Nullgeometrie (erste Konfiguration K1) und Rückfederungsgeometrie (zweite Konfiguration K2).

An diesem Punkt sind alle notwendigen Struktureigenschaften sowie Geometrie-Randbedingungen zur geometrisch nichtlinearen Berechnung (Simulation) der Korrekturgeometrie bzw. der Ziel-Verschiebungsvektoren $\vec{k}$ definiert. Dies beinhaltet die Bauteilgeometrie und alle relevanten Werkstoffkennwerte. Die vollständige Beschreibung der Steifigkeit des Werkstücks ist damit gegeben. Des Weiteren ist eine Komponente $v_1$ des gesuchten Ziel-Verschiebungsvektors $\vec{k}$ vorgegeben. Die zur eindeutigen Definition der gesuchten Ziel-Verschiebungsvektoren noch benötigten Komponenten ($v_2$, $v_3$) ergeben sich aus dem geometrisch nichtlinearen Werkstückverhalten, welches über die Steifigkeitsmatrix **K** als Funktion der Spannungsmatrix $\mathbf{K}_\sigma$ berücksichtigt werden kann, sowie der ersten Komponente $v_1$ aus der Lösung eines nicht linearen Gleichungssystems der Finite-Elemente-Methode. Hierzu kann beispielsweise das Newton- oder Newton-Raphson-Verfahren genutzt werden. Die Komponenten $v_2$ und $v_3$ ergeben sich infolge der zusätzlichen quadratischen Terme bei der Formulierung der Green-Lagrange-Dehnungen in der nichtlinearen FEM und die daraus resultierende Erweiterung der Steifigkeitsmatrix **K** um die Spannungsmatrix $\mathbf{K}_\sigma$.

Auch bei dem Funktionsprinzip des zweiten Ausführungsbeispiels handelt es sich somit um keinen rein geometrischen Ansatz, sondern um einen physikalischen Ansatz, da bei der Berechnung der Kompensation die Bauteilsteifigkeit berücksichtigt wird. Dadurch wird ein hohes Maß an Flächengleichheit bzw. Abwicklungsgleichheit der erzielten Korrekturgeometrie zur Nullgeometrie sichergestellt. Anhand von Fig. 22 wird ein Vergleich der Abwicklungslängen der Nullgeometrie (erste Konfiguration K1) mit den Abwicklungslängen der Korrekturgeometrien bei Kompensation gemäß dem zweiten Ausführungsbeispiel (helle Schraffur NM) und der DA-Methode (dunkle Schraffur DA) dargestellt. Die Nullgeometrie (erste Konfiguration K1) ist gekennzeichnet durch eine Abwicklungslänge von 247,98 mm und eine Abwicklungslänge des schrägen Abschnitts des Hohlprofils von 48,284 mm. Bei einer Kompensation nach der DA-Methode ergeben sich die Werte 253,839 mm bzw. 50,012 mm, was einem Abwicklungsfehler im schrägen Abschnitt von ca. 3,58 % entspricht. Nach dem neuen Verfahren ergibt sich eine Gesamt-Abwicklungslänge von 248,087 mm sowie im schrägen Abschnitt eine Abwicklungslänge von 48,32 mm, was dort einem Abwicklungsfehler von 0,074 % entspricht. Es ist ersichtlich, dass auch diese Variante zu erheblichen Verbesserungen gegenüber der herkömmlichen DA-Methode führt.

Wurde die Nullgeometrie (erste Konfiguration K1) durch die in Form von Randbedingungen definierten Verschiebungen in der Finite-Elemente-Software virtuell überbogen, werden die Verschiebungen der Knoten im globalen Koordinatensystem sowie die Koordinaten der den Verschiebungen zugeordneten Knoten aus der Finite-Elemente-Software ausgelesen. Anschließend kann mithilfe einer CAD-Software, zum Beispiel CATIA® RSO, mithilfe der Verschiebungen und der Koordinaten die sogenannte CAD-Wirkfläche abgeleitet werden. Die so erzeugte Korrekturgeometrie wird nun als Werkzeuggeometrie bzw. als Wirkflächengeometrie-Spezifikation für eine erneute Umformsimulation - inklusive Rückfederungssimulation - definiert. Liegt nach der Simulation kein form- und maßhaltiges Bauteil vor, kann eine weitere Kompensationsschleife nach der hier dargelegten Strategie durchlaufen werden.

**Patentansprüche**

1. Verfahren zur Ermittlung einer Wirkfläche eines Umformwerkzeugs zur Herstellung eines komplexen Umformteils mit einer Zielgeometrie durch ziehtechnisches Umformen eines Werkstücks mit:

   Simulieren einer Umformoperation an dem Werkstück mittels eines Nullwerkzeugs (NWZ) zur Erzeugung einer ersten Konfiguration (K1) des Werkstücks (W), wobei das Nullwerkzeug ein Umformwerkzeug repräsentiert, das eine Wirkflächengeometrie aufweist, welche der angestrebten Zielgeometrie des Werkstücks entspricht; und Simulieren einer elastischen Rückfederung des Werkstücks aus der ersten Konfiguration (K1) in eine von externen Kräften weitgehend freie zweite Konfiguration (K2), wobei die Simulation auf Basis eines elastisch-plastischen Materialmodells des Werkstücks erfolgt; oder Beschreiben der ersten Konfiguration (K1) und der zweiten Konfiguration (K2) durch eine Ansammlung von topologischen Punkten; Berechnen eines Abweichungsvektorfeldes mit Abweichungsvektoren (ABV) zwischen der ersten Konfiguration (K1) und der zweiten Konfiguration (K2); Durchführen einer nichtlinearen strukturmechanischen Finite-Elemente-Simulation an dem Werkstück, wobei das Werkstück durch die nichtlineare strukturmechanische Finite-Elemente-Simulation unter Verwendung von Abweichungsvektoren (ABV) des Abweichungsvektorfeldes ausgehend von der ersten oder der zweiten Konfiguration in eine Zielkonfiguration verformt wird, **dadurch gekennzeichnet, dass**

EP 3 405 891 B1

bei der nichtlinearen strukturmechanischen Finite-Elemente-Simulation folgende Schritte durchgeführt werden:

Definieren von mindestens drei Fixierungspunkten (FIX1, FIX2, FIX3, FIX4) der ersten oder der zweiten Konfiguration, wobei die Fixierungspunkte dafür vorgesehen sind, bei der nichtlineare strukturmechanische Finite-Elemente-Simulation bezüglich ihrer Lage unverändert zu bleiben;
Fixieren der ersten Konfiguration (K1) oder der zweiten Konfiguration (K2) in den Fixierungspunkten;
Annähern der Konfiguration des Werkstücks an die Zielkonfiguration außerhalb der Fixierungspunkte mittels Berechnung von Kräften oder Verschiebungen unter Berücksichtigung der Steifigkeit des Werkstücks bis zum Erreichen der Zielkonfiguration;
Festlegen der erreichten Zielkonfiguration als Wirkfläche für das Umformwerkzeug.

2. Verfahren nach Anspruch 1,
worin das Definieren von Fixierungspunkten (FIX1, FIX2, FIX3, FIX4) folgende Schritte umfasst:

Auswählen eines regionalen oder globalen Anpassungsbereichs, in welchem eine Anpassung zwischen der ersten Konfiguration (K1) und der zweiten Konfiguration (K2) erfolgen soll;
Relative Ausrichtung der ersten Konfiguration (K1) und der zweiten Konfiguration (K2) derart, dass nach Maßgabe eines Abweichungskriteriums, insbesondere nach der Methode der kleinsten Fehlerquadrate, in dem Anpassungsbereich eine minimale geometrische Abweichung zwischen der ersten Konfiguration und der zweiten Konfiguration vorliegt;
Definieren von Fixierungspunkten (FIX1, FIX2, FIX3, FIX4) an mindestens drei ausgewählten Positionen mit einem lokalen Minimum einer Abweichung zwischen der ersten Konfiguration (K1) und der zweiten Konfiguration (K2).

3. Verfahren nach Anspruch 2,
worin Positionen von Fixierungspunkten (FIX1, FIX2, FIX3) derart ausgewählt werden, dass die Fixierungspunkte mindestens eine Dreiecksanordnung bilden.

4. Verfahren nach einem der vorhergehenden Ansprüche,
worin bei einer kräftebasierten Simulation folgende Schritte durchgeführt werden:

Berechnen des Abweichungsvektorfeldes mit Abweichungsvektoren zwischen Netzknoten der ersten Konfiguration (K1) und zugeordneten Netzknoten der zweiten Konfiguration (K2);
Berechnen einer zu der zweiten Konfiguration inversen dritten Konfiguration (K3) auf Basis des Abweichungsvektorfeldes, wobei aus den Abweichungsvektoren durch geometrische Invertierung bezüglich der ersten Konfiguration Korrekturvektoren (KV) berechnet werden und die dritte Konfiguration (KV) durch Anwendung der Korrekturvektoren auf Netzknoten der ersten Konfiguration (K1) berechnet wird;
Einleiten von Verformungskräften (F) in das Werkstück in mindestens einem außerhalb eines Fixierungspunkts liegenden Krafteinleitungsbereich zur Annäherung der Konfiguration des Werkstücks an die dritte Konfiguration (K3);
Ermitteln von Verformungen des Werkstücks bei Einwirkung der Verformungskräfte mittels der nichtlinearen strukturmechanischen Finite-Elemente-Simulation unter Berücksichtigung der Steifigkeit des Werkstücks;
Variieren der Verformungskräfte bis bei elastischer Verformung die Zielkonfiguration erreicht ist; Festlegen der erreichten Zielkonfiguration als Wirkfläche für das Umformwerkzeug.

5. Verfahren nach Anspruch 4,
worin die dritte Konfiguration (K3) durch ein Stützelement-Raster mit einer Vielzahl von mit Abstand zueinander liegenden Stützelementen (SE) definiert wird, wobei jedes Stützelement eine Position auf der Zielkonfiguration repräsentiert.

6. Verfahren nach Anspruch 4 oder 5,
**gekennzeichnet durch** eine gleichzeitige oder sequentielle Krafteinleitung an unterschiedlichen Krafteinleitungsbereichen bis zu einem Anliegen der Konfiguration an einer Vielzahl von Stützelementen (SE) bei elastischer Verformung.

7. Verfahren nach einem der Ansprüche 1 bis 3,
worin bei einer verschiebungsbasierten Berechnung folgende Schritte durchgeführt werden:

16

Berechnen eines Abweichungsvektorfeldes mit Abweichungsvektoren zwischen der ersten Konfiguration (K1) und der zweiten Konfiguration (K2) derart, dass jeder Abweichungsvektor ein Normal-Abweichungsvektor (NA) ist, der an einen ausgewählten Ort der ersten Konfiguration senkrecht zu der durch die erste Konfiguration definierten ersten Fläche an dem Ort steht und den Ort mit einem zugeordneten Ort der zweiten Konfiguration (K2) verbindet;

Berechnen eines Ziel-Verschiebungsvektorfelds mit einer Vielzahl von Ziel-Verschiebungsvektoren ($\vec{k}$), wobei jeder Ziel-Verschiebungsvektor einen ausgewählten Ort der ersten Konfiguration (K1) mit einem zugeordneten Ort der Zielkonfiguration verbindet;

wobei erste Komponenten ($v_1$) der Ziel-Verschiebungsvektoren durch geometrische Invertierung von Normal-Abweichungsvektoren (NA) des Abweichungsvektorfeldes bezüglich der ersten Konfiguration vorgegeben werden und

zweite und dritte Komponenten ($v_2$, $v_3$) der Ziel-Verschiebungsvektoren basierend auf den ersten Komponenten ($v_1$) mittels der nichtlinearen strukturmechanischen Finite-Elemente-Simulation unter Berücksichtigung der Steifigkeit des Werkstücks berechnet werden.

8. Verfahren nach einem der vorhergehenden Ansprüche,
**gekennzeichnet durch** mindestens eine weitere nichtlineare strukturmechanische Finite-Elemente-Simulation an dem Werkstück nach Abschluss einer ersten nichtlinearen strukturmechanischen Finite-Elemente-Simulation unter Verwendung eines kompensierten Umformwerkzeugs mit einer Wirkfläche gemäß einer vorangegangenen nichtlinearen strukturmechanischen Finite-Elemente-Sim ulation.

9. Verfahren zur Herstellung eines Umformwerkzeugs zur Herstellung eines komplexen Umformteils mit einer Zielgeometrie durch ziehtechnisches Umformen eines Werkstücks, wobei das Umformwerkzeug eine Wirkfläche zum Angreifen an das umzuformende Werkstück aufweist mit:

Ermitteln einer Wirkflächengeometrie-Spezifikation für die Wirkfläche gemäß dem Verfahren nach einem der vorhergehenden Ansprüche;
Erzeugen der Wirkfläche gemäß der Wirkflächengeometrie-Spezifikation.

10. Verfahren zur Herstellung eines komplexen Umformteils mit einer Zielgeometrie durch ziehtechnisches Umformen eines Werkstücks unter Verwendung eines Umformwerkzeugs, das eine Wirkfläche zum Angreifen an dem umzuformenden Werkstück aufweist,
wobei ein Umformwerkzeug verwendet wird, das gemäß dem Verfahren nach Anspruch 9 hergestellt ist.

11. Computerprogrammprodukt, welches insbesondere auf einem computerlesbaren Medium gespeichert oder als Signal verwirklicht ist, wobei das Computerprogrammprodukt, wenn es in den Speicher eines geeigneten Computers geladen und von einem Computer ausgeführt ist bewirkt, dass der Computer ein Verfahren gemäß einem der Ansprüche 1 bis 8 durchführt.

**Claims**

1. Method for determining an active surface of a forming tool for producing a complex formed part with a target geometry by performing a drawing type of forming process on a workpiece comprising:

simulating a forming operation on the workpiece by means of a zero tool (NWZ) for producing a first configuration (K1) of the workpiece (W), the zero tool representing a forming tool which has an active surface geometry that corresponds to the desired target geometry of the workpiece; and
simulating an elastic springback of the workpiece from the first configuration (K1) into a second configuration (K2), which is largely free of external forces, the simulation being performed on the basis of an elastic-plastic material model of the workpiece; or
describing the first configuration (K1) and the second configuration (K2) by an accumulation of topological points;
calculating a deviation vector field with deviation vectors (ABV) between the first configuration (K1) and the second configuration (K2);
carrying out a non-linear structural-mechanical finite-element simulation on the workpiece, the workpiece being deformed by the non-linear structural-mechanical finite-element simulation from the first configuration or the second configuration into a target configuration by using deviation vectors (ABV) of the deviation vector field,
**characterized in that**

the following steps are carried out in the non-linear structural-mechanical finite-element simulation:

defining at least three fixing points (FIX1, FIX2, FIX3, FIX4) of the first configuration or the second configuration, the fixing points being intended to remain unchanged with respect to their position during the non-linear structural-mechanical finite-element simulation;
fixing the first configuration (K1) or the second configuration (K2) at the fixing points;
approximating the configuration of the workpiece to the target configuration outside the fixing points by means of calculating forces or displacements while taking into account the stiffness of the workpiece until the target configuration is achieved;
specifying the achieved target configuration as the active surface for the forming tool.

2. Method according to claim 1, wherein the defining of fixing points (FIX1, FIX2, FIX3, FIX4) comprises the following steps:

selecting a regional or global adaptation region in which an adaptation between the first configuration (K1) and the second configuration (K2) is to be performed;
aligning the first configuration (K1) and the second configuration (K2) in relation to one another in such a way that in the adaptation region there is a minimal geometrical deviation between the first configuration and the second configuration in accordance with a deviation criterion, in particular by the method of least squares;
defining fixing points (FIX1, FIX2, FIX3, FIX4) at at least three selected positions with a local minimum of a deviation between the first configuration (K1) and the second configuration (K2).

3. Method according to claim 2, wherein positions of fixing points (FIX1, FIX2, FIX3) are selected in such a way that the fixing points form at least a triangular arrangement.

4. Method according to any of the preceding claims, wherein the following steps are carried out in a force-based simulation:

calculating the deviation vector field with deviation vectors between mesh nodes of the first configuration (K1) and assigned mesh nodes of the second configuration (K2);
calculating a third configuration (K3) inverse to the second configuration on the basis of the deviation vector field, correction vectors (KV) being calculated from the deviation vectors by geometrical inversion with respect to the first configuration, and the third configuration (K3) being calculated by applying the correction vectors to mesh nodes of the first configuration (K1);
introducing deformation forces (F) into the workpiece in at least one force introduction region lying outside a fixing point to approximate the configuration of the workpiece to the third configuration (K3);
determining deformations of the workpiece under the effect of the deformation forces by means of the non-linear structural-mechanical finite-element simulation while taking into account the stiffness of the workpiece;
varying the deformation forces until the target configuration is achieved under elastic deformation;
specifying the achieved target configuration as the active surface for the forming tool.

5. Method according to claim 4, wherein the third configuration (K3) is defined by a supporting element grid with a multiplicity of supporting elements (SE) lying at a distance from one another, each supporting element representing a position on the target configuration.

6. Method according to claim 4 or 5, **characterized by** a simultaneous or sequential introduction of force at different force introduction regions until the configuration is lying against a multiplicity of supporting elements (SE) under elastic deformation.

7. Method according to any of claims 1 to 3,
wherein the following steps are carried out in a displacement-based calculation:

calculating a deviation vector field with deviation vectors between the first configuration (K1) and the second configuration (K2) in such a way that each deviation vector is a normal deviation vector (NA), which at a selected location of the first configuration is perpendicular to the first surface area defined by the first configuration at the location and connects the location to an assigned location of the second configuration (K2);
calculating a target displacement vector field with a multiplicity of target displacement vectors ($\vec{k}$), each target displacement vector connecting a selected location of the first configuration (K1) to an assigned location of the target configuration;

first components ($v_1$) of the target displacement vectors being prescribed by geometrical inversion of normal deviation vectors (NA) of the deviation vector field with respect to the first configuration and

second and third components ($v_2$, $v_3$) of the target displacement vectors being calculated on the basis of the first components ($v_1$) by means of the non-linear structural-mechanical finite-element simulation while taking into account the stiffness of the workpiece.

8.  Method according to any of the preceding claims, **characterized by** at least one further non-linear structural-mechanical finite-element simulation on the workpiece after completion of a first non-linear structural-mechanical finite-element simulation by using a compensated forming tool with an active surface according to a previous non-linear structural-mechanical finite-element simulation.

9.  Method for producing a forming tool for producing a complex formed part with a target geometry by performing a drawing type of forming process on a workpiece, wherein the forming tool has an active surface for engaging the workpiece to be formed comprising:

    determining an active-surface geometry specification for the active surface according to the method as claimed in any of the preceding claims;
    producing the active surface according to the active-surface geometry specification.

10. Method for producing a complex formed part with a target geometry by performing a drawing type of forming process on a workpiece by using a forming tool that has an active surface for engaging the workpiece to be formed, a forming tool which is produced according to the method as claimed in claim 9 being used.

11. Computer program product, which is in particular stored on a computer-readable medium or realized as a signal, the computer program product, when it is loaded into the memory of a suitable computer and executed by a computer, having the effect that the computer carries out a method according to any of claims 1 to 8.

**Revendications**

1.  Procédé pour déterminer une face active d'un outil de formage pour la fabrication d'une pièce de forme complexe avec une géométrie visée par formage d'une pièce par une technique d'emboutissage, comprenant les opérations suivantes:

    simuler une opération de formage sur la pièce avec un outil zéro (NWZ) pour la production d'une première configuration (K1) de la pièce (W), dans lequel l'outil zéro représente un outil de formage, qui présente une géométrie de face active qui correspond à la géométrie visée recherchée de la pièce; et
    simuler un retour élastique de la pièce à partir de la première configuration (K1) dans une deuxième configuration (K2) largement libre de forces externes, dans lequel la simulation est effectuée sur la base d'un modèle de matériau élastique-plastique de la pièce;
    ou
    décrire la première configuration (K1) et la deuxième configuration (K2) par une accumulation de points topologiques;
    calculer un champ de vecteurs de déviation avec des vecteurs de déviation (ABV) entre la première configuration (K1) et la deuxième configuration (K2);
    opérer une simulation par éléments finis structurelle mécanique non linéaire sur la pièce, dans lequel on déforme la pièce par la simulation par éléments finis structurelle mécanique non linéaire avec utilisation de vecteurs de déviation (ABV) du champ de vecteurs de déviation en partant de la première ou de la deuxième configuration jusqu'à une configuration visée,
    **caractérisé en ce que** dans la simulation par éléments finis structurelle mécanique non linéaire on exécute les étapes suivantes:

    définir au moins trois points de fixation (FIX1, FIX2, FIX3, FIX4) de la première ou de la deuxième configuration, dans lequel les points de fixation sont prévus pour rester dans une position inchangée lors de la simulation par éléments finis structurelle mécanique non linéaire;
    fixer la première configuration (K1) ou la deuxième configuration (K2) dans les points de fixation;
    approcher la configuration de la pièce de la configuration visée à l'extérieur des points de fixation au moyen du calcul de forces ou de déplacements en tenant compte de la rigidité de la pièce jusqu'à atteindre la configuration visée;

fixer la configuration visée atteinte comme face active pour l'outil de formage.

2. Procédé selon la revendication 1, dans lequel la définition de points de fixation (FIX1, FIX2, FIX3, FIX4) comprend les étapes suivantes:

sélection d'une zone d'adaptation régionale ou globale, dans laquelle une adaptation entre la première configuration (K1) et la deuxième configuration (K2) doit être effectuée;

orientation relative de la première configuration (K1) et de la deuxième configuration (K2) de telle manière que, en vertu d'un critère de déviation, en particulier selon la méthode des moindres carrés de défauts, il existe dans la zone d'adaptation une déviation géométrique minimale entre la première configuration et la deuxième configuration;

définition de points de fixation (FIX1, FIX2, FIX3, FIX4) dans au moins trois positions sélectionnées avec un minimum local d'une déviation entre la première configuration (K1) et la deuxième configuration (K2).

3. Procédé selon la revendication 2, dans lequel on choisit les positions de points de fixation (FIX1, FIX2, FIX3) de telle manière que les points de fixation forment au moins un agencement triangulaire.

4. Procédé selon l'une quelconque des revendications précédentes, dans lequel on exécute les étapes suivantes lors d'une simulation basée sur les forces:

calculer le champ de vecteurs de déviation avec des vecteurs de déviation entre des noeuds de réseau de la première configuration (K1) et des noeuds de réseau associés de la deuxième configuration (K2);

calculer une troisième configuration (K3) inverse de la deuxième configuration sur la base du champ de vecteurs de déviation, dans lequel on calcule à partir des vecteurs de déviation des vecteurs de correction (KV) par inversion géométrique par rapport à la première configuration et on calcule la troisième configuration (KV) par application des vecteurs de correction à des noeuds de réseau de la première configuration (K1);

introduire des forces de déformation (F) dans la pièce dans au moins une région d'introduction de forces située à l'extérieur d'un point de fixation en approchant la configuration de la pièce de la troisième configuration (K3);

déterminer des déformations de la pièce par l'action des forces de déformation au moyen de la simulation par éléments finis structurelle mécanique non linéaire en tenant compte de la rigidité de la pièce;

faire varier les forces de déformation jusqu'à ce que la configuration visée soit atteinte en déformation élastique;

fixer la configuration visée atteinte comme face active pour l'outil de formage.

5. Procédé selon la revendication 4, dans lequel on définit la troisième configuration (K3) par une trame d'éléments de support avec une multiplicité d'éléments de support (SE) situés à distance les uns des autres, dans lequel chaque élément de support représente une position sur la configuration visée.

6. Procédé selon une revendication 4 ou 5, **caractérisé par** une introduction de forces simultanée ou séquentielle dans différentes régions d'introduction de forces jusqu'à une application de la configuration sur une multiplicité d'éléments de support (SE) en déformation élastique.

7. Procédé selon l'une quelconque des revendications 1 à 3, dans lequel on exécute les étapes suivantes lors d'un calcul basé sur les déplacements:

calculer un champ de vecteurs de déviation avec des vecteurs de déviation entre la première configuration (K1) et la deuxième configuration (K2), de telle manière que chaque vecteur de déviation soit un vecteur de déviation normal (NA), qui est perpendiculaire, en un endroit sélectionné de la première configuration, à la première face définie par la première configuration à cet endroit et qui relie cet endroit à un endroit associé de la deuxième configuration (K2);

calculer un champ de vecteurs de déplacement visés avec une multiplicité de vecteurs de déplacement visés ($\vec{k}$), dans lequel chaque vecteur de déplacement visé relie un endroit sélectionné de la première configuration (K1) à un endroit associé de la configuration visée;

dans lequel on prédétermine des premières composantes ($v_1$) des vecteurs de déplacement visés par inversion géométrique de vecteurs de déviation normaux (NA) du champ de vecteurs de déviation par rapport à la première configuration, et

on calcule des deuxièmes et troisièmes composantes ($v_2$, $v_3$) des vecteurs de déplacement visés en se basant sur les premières composantes ($v_1$) au moyen de la simulation par éléments finis structurelle mécanique non linéaire en tenant compte de la rigidité de la pièce.

8. Procédé selon l'une quelconque des revendications précédentes, **caractérisé par** au moins une autre simulation par éléments finis structurelle mécanique non linéaire sur la pièce après la fin de la première simulation par éléments finis structurelle mécanique non linéaire avec utilisation d'un outil de formage compensé avec une face active selon une simulation par éléments finis structurelle mécanique non linéaire précédente.

9. Procédé de fabrication d'un outil de formage pour la fabrication d'une pièce de forme complexe avec une géométrie visée par formage d'une pièce par une technique d'emboutissage, dans lequel l'outil de formage présente une face active à appliquer à la pièce à former, comprenant les opérations suivantes:

   déterminer une spécification de la géométrie de face active pour la face active par le procédé selon l'une quelconque des revendications précédentes;
   produire la face active selon la spécification de la géométrie de face active.

10. Procédé de fabrication d'une pièce de forme complexe avec une géométrie visée par formage d'une pièce par une technique d'emboutissage avec utilisation d'un outil de formage, qui présente une face active à appliquer à la pièce à former,
    dans lequel on utilise un outil de formage, qui a été fabriqué par le procédé selon la revendication 9.

11. Produit de programme informatique, qui est mémorisé sur un support lisible à la machine ou concrétisé sous forme de signal, dans lequel, lorsqu'il est chargé dans la mémoire d'un ordinateur approprié et exécuté par un ordinateur, le produit de programme informatique entraîne que l'ordinateur exécute un procédé selon l'une quelconque des revendications 1 à 8.

W

L

B1

B

## Fig. 1

WF

NWZ

K2

K1

K3

ABV

KV

## Fig. 2

ABS

K2

K1

## Fig. 3

ABS

K1

K3

## Fig. 4

ABS

K2-1

K1

## Fig. 5A

Fig. 5B

Fig. 6

Fig. 7

Fig. 8

Fig. 10A

Fig. 10B

Fig. 10C

Fig. 9A

Fig. 9B

Fig. 11A

Fig. 11B

Fig. 12A

Fig. 12B

FIX1    FIX2

K3

Fig. 13A

F1

F1

Fig. 13B

F2

F2

Fig. 13C

Fig. 14

Fig. 15

Fig. 16

Fig. 17

Fig. 18

Fig. 19

Fig. 20

K2

NA

K1

V1

$\vec{k}$

V2

V3

u   w

v

KS

Fig. 21

K1

NM

DA

Fig. 22

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005044197 A1

**In der Beschreibung aufgeführte Nicht-Patentliteratur**

- Umformtechnische Herstellung komplexer Karosserieteile. **A. BIRKERT ; S. HAAGE ; M. STRAUB.** Auslegung von Ziehanlagen. Springer Vieweg-Verlag, 2013
- **W. GAN ; R.H. WAGONER.** Die design method for sheet springback. *International Journal of Mechanical Sciences,* 2004, vol. 46, 1097-1113
- **X. YANG ; F. RUAN.** A die design method for springback compensation based on displacement adjustment. *International Journal of Mechanical Sciences,* 2011
- **W. RUST.** Nichtlineare Finite-Elemente-Berechnungen. Vieweg+Teubner Verlag, 2009, 21